# EUROPEAN PATENT SPECIFICATION

(11) **EP 2 097 482 B1**
(45) Date of publication and mention of the grant of the patent: **29.09.2010**
(21) Application number: 07814280.9
(22) Date of filing: 21.08.2007
(51) Int. Cl.: C08L 67/02, C08L 69/00

(54) **NEW POLYESTER-POLYCARBONATE BLENDS**
NEUE POLYESTER-POLYCARBONAT-BLENDS
NOUVEAUX MÉLANGES DE POLYESTER-POLYCARBONATE

(30) Priority: 28.12.2006 US 617043
(43) Date of publication of application: 09.09.2009
(73) Proprietor: SABIC Innovative Plastics IP B.V., 4612PX Bergen op Zoom (NL)
(72) Inventor: CHAKRAVARTI, Shreyas, Evansville, IN 47712 (US); CHARDRASHEKHAR, L., Karnataka 560 079 (IN); MORYE, Shantaram, Suryakant, Bangalore 560 017 (IN)
(74) Representative: Bauer, Clemens
(86) International application number: PCT/US2007/076354
(87) International publication number: WO 2008/082706

(56) References cited:
- WO-A-2004/110902
- US-A1- 2005 143 554
- US-A1- 2005 288 517
- US-A1- 2006 004 152

## Description

### BACKGROUND OF THE INVENTION

This invention relates to polyester compositions, articles made from the compositions, and methods for making and using the compositions.

Polycarbonate (PC) is a useful engineering plastic for parts requiring clarity, high toughness, and, in some cases, good heat resistance. However, polycarbonate also has some important deficiencies, among them poor heat, chemical and stress crack resistance, poor resistance to sterilization by gamma radiation, and poor processability. Polycarbonates may be blended with other different, miscible or immiscible polymers, to improve various mechanical or other properties of the polycarbonate. For applications requiring improved mechanical properties, miscible blends are useful, as they also allow use of the blends for applications requiring transparency. Specifically, polyesters may be blended with polycarbonates for improved properties over those based upon either of the single resins alone. However, other properties of polycarbonates, specifically optical properties, may be adversely affected by forming a blend, where the polycarbonate can form a hazy appearance and diminished light transmittance.

Phenolphthalein has been used as an aromatic dihydroxy compound monomer for preparing polycarbonates, which are generally characterized with excellent ductility and high glass transition temperatures. For example, polycarbonate homopolymers have been prepared by an interfacial polycondensation method using phosgene and monomers such as 3,3 - bis (4-hydroxyphenyl) phthalimidine and 2-phenyl-3,3-bis(4-hydroxyphenyl)phthalimidine (hereinafter sometimes referred to as "para,para-PPPBP"). The impurities in the para, para-PPPBP monomer include, for example, trace (parts per million) levels of phenolphthalein or phenolphthalein residues that can undesirably produce discoloration in the polycarbonates and other polymers derived therefrom, thereby affecting the transparency of the polymer product and coloration is not desirable for many commercial applications. US. Pat. No. 5,344,910 discloses that copolymers of para, para-PPPBP were found to have poor melt stability resulting in foamy polymer melts and moldings, and discoloration of the resin during melt processing.

Transparent, miscible compositions of any two polymers are rare. The term "miscible," as used in the specification, refers to compositions that are a mixture on a molecular level wherein intimate polymer-polymer interaction is achieved. Miscible compositions are transparent, not opaque. In addition, differential scanning calorimetry testing detects only a single glass transition temperature (Tg) for miscible blends composed of two or more components. Thus miscibility of polycarbonate with the polyesters gives the blends the clarity needed.

Clear polycarbonate/polyester blends have been reported in US. Pat. Nos. 4,619,976; 4,188,314; 4,391,954; 4,188,314; 4,125,572; 4,391,954; 4,786,692; 4,897,453; 5,478,896; 4,125,572; 4,786,692 and 4,645,802 disclose clear blends based on bisphenol A polycarbonate with a variety of polyesters for example poly(1,4- tetramethylene terephthalate), poly(1,4-cyclohexylenedimethylene terephthalate) and selected copolyesters and copoly(ester-imides) of poly(1,4-cyclohexylenedimethylene terephthalate).. However, the heat resistance and impact strength of bisphenol A polycarbonate blends based on these compositions is reduced significantly relative to polycarbonate alone.

There exists an unmet need to provide an article with a good balance of optical property, improved heat resistance, processability, solvent resistance, and mechanical properties and flame resistance.

For the foregoing reasons, there is an unmet need to develop methods for making polyester blend compositions that can provide a combination of high heat, good optical properties without loss in the mechanical properties.

For the foregoing reasons, there is an unmet need to develop articles derived from such blend compositions that can provide a combination of high heat, good optical properties without loss in the mechanical properties.

For the foregoing, the industry needs to develop technologies that can provide molding compositions having useful mechanical and optical properties with polyesters having high heat resistance and good optical properties.

### BRIEF DESCRIPTION OF THE INVENTION

According to one embodiment of the present invention, the invention relates to a composition of matter comprising a thermoplastic resin composition derived from (i) 20 weight percent to 80 weight percent of a polyester derived from a diol comprising cyclohexane dimethanol and a diacid; (ii) 5 weight percent to 80 weight percent of a copolycarbonate derived from 20 weight percent to 70 weight percent of a 2-hydrocarbyl-3,3-bis(hydroxyaryl)phthalimidine and from 30 weight percent to 80 weight percent of a second aromatic dihydroxy compound; (iii) 0 weight percent to 70 weight percent of a thermoplastic resin, C wherein the thermoplastic resin C is selected from the group consisting of a homopolycarbonate, a poly(estercarbonate), a poly(arylatecarbonate) and combinations thereof; and wherein the resin composition is transparent.

In another embodiment, the invention relates to a process comprising: (a) mixing a polyester, a copolycarbonate and a thermoplastic C, to form a first mixture; (b) heating the first mixture at a temperature sufficiently high to form a composition of matter comprising a thermoplastic resin composition derived (i) from 20 weight percent to 80 weight percent of a polyester derived from a diol comprising cyclohexane dimethanol and a diacid; (ii) from 5 weight percent to 80 weight percent of a copolycarbonate derived from 20 weight percent to 70 weight percent of a 2-hydrocarbyl-3,3-bis(hydroxyaryl)phthalimidine and from 30 weight percent to 80 weight percent of a second aromatic dihydroxy compound; (iii) from 0 weight percent to 70 weight percent of a thermoplastic C; and wherein the resin composition is transparent.

In another embodiment, the invention relates to an article molded from such a composition.

In another embodiment, the invention relates to a method of making an article by extruding, molding, or shaping the above-described compositions into an article.

Various other features, aspects, and advantages of the present invention will become more apparent with reference to the following description, examples, and appended claims.

### DETAILED DESCRIPTION OF THE INVENTION

The invention is based on the discovery that blends of polyester and certain copolycarbonates derived from a 2-hydrocarbyl-3,3-bis(hydroxyaryl)phthalimidine and a second aromatic dihydroxy compounds, lead to blends with good heat and optical properties without loss in mechanical properties. The invention is also based on the discovery that addition of polycarbonates, polyester carbonates, or polyarylates to the blends also give blends with good optical properties and heat even at higher amounts of the 2-hydrocarbyl-3,3-bis(hydroxyaryl)phthalimidine in the blend.

The present invention may be understood more readily by reference to the following detailed description of preferred embodiments of the invention and the examples included herein. In this specification and in the claims, which follow, reference will be made to a number of terms which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

"Combination" as used herein includes mixtures, copolymers, reaction products, blends, composites, and the like.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values and are inclusive of the minimum and maximum value. Unless expressly indicated otherwise, the various numerical ranges specified in this application are approximations.

All ASTM tests and data is from the 2003 edition of the Annual Book of ASTM Standards unless otherwise indicated.

As used herein the term "polycarbonate" refers to polycarbonates incorporating structural units derived from one or more dihydroxy aromatic compounds and includes copolycarbonates and polyester.

As used herein the term "aliphatic radical" refers to a radical having a valence of at least one comprising a linear or branched array of atoms which, is not cyclic. The array may include heteroatoms such as nitrogen, sulfur, silicon, selenium and oxygen or may be composed exclusively of carbon and hydrogen. Aliphatic radicals may be "substituted" or "unsubstituted". A substituted aliphatic radical is defined as an aliphatic radical that comprises at least one substituent. A substituted aliphatic radical may comprise as many substituents as there are positions available on the aliphatic radical for substitution. Substituents that can be present on an aliphatic radical include but are not limited to halogen atoms such as fluorine, chlorine, bromine, and iodine. Substituted aliphatic radicals include trifluoromethyl, hexafluoroisopropylidene, chloromethyl; difluorovinylidene; trichloromethyl, bromoethyl, bromotrimethylene (e.g. -CH₂CHBrCH₂-), and the like. For convenience, the term "unsubstituted aliphatic radical" is defined herein to encompass, as part of the "linear or branched array of atoms which is not cyclic" comprising the unsubstituted aliphatic radical, a wide range of functional groups. Examples of unsubstituted aliphatic radicals include allyl, aminocarbonyl (i.e. -CONH₂), carbonyl, dicyanoisopropylidene (i.e. -CH₂C(CN)₂CH₂-), methyl (i.e. -CH₃), methylene (i.e. -CH₂-), ethyl, ethylene, formyl, hexyl, hexamethylene, hydroxymethyl (i.e.-CH₂OH), mercaptomethyl (i.e. -CH₂SH), methylthio (i.e. -SCH₃), methylthiomethyl (i.e. -CH₂SCH₃), methoxy, methoxycarbonyl, nitromethyl (i.e. -CH₂NO₂), thiocarbonyl, trimethylsilyl, t-butyldimethylsilyl, trimethyoxysilypropyl, vinyl, vinylidene, and the like. Aliphatic radicals are defined to comprise at least one carbon atom. A C₁ - C₁₀ aliphatic radical includes substituted aliphatic radicals and unsubstituted aliphatic radicals containing at least one but no more than 10 carbon atoms.

As used herein, the term "aromatic radical" refers to an array of atoms having a valence of at least one comprising at least one aromatic group. The array of atoms having a valence of at least one comprising at least one aromatic group may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatic components. For example, a benzyl group is an aromatic radical, which comprises a phenyl ring (the aromatic group) and a methylene group (the nonaromatic component). Similarly a tetrahydronaphthyl radical is an aromatic radical comprising an aromatic group (C₆H₃) fused to a nonaromatic component -(CH₂)₄⁻. Aromatic radicals may be "substituted" or "unsubstituted". A substituted aromatic radical is defined as an aromatic radical, which comprises at least one substituent. A substituted aromatic radical may comprise as many substituents as there are positions available on the aromatic radical for substitution. Substituents, which may be present on an aromatic radical, include, but are not limited to halogen atoms such as fluorine, chlorine, bromine, and iodine. Substituted aromatic radicals include trifluoromethylphenyl, hexafluoroisopropylidenebis(4-phenyloxy) (i.e. -OPhC(CF₃)₂PhO-), chloromethylphenyl; 3-trifluorovinyl-2-thienyl; 3-trichloromethylphenyl (i.e. 3-CCl₃Ph-), bromopropylphenyl (i.e. BrCH₂CH₂CH₂Ph-), and the like. For convenience, the term "unsubstituted aromatic radical" is defined herein to encompass, as part of the "array of atoms having a valence of at least one comprising at least one aromatic group", a wide range of functional groups. Examples of unsubstituted aromatic radicals include 4-allyloxyphenoxy, aminophenyl (i.e. H₂NPh-), aminocarbonylphenyl (i.e. NH₂COPh-), 4-benzoylphenyl, dicyanoisopropylidenebis(4-phenyloxy) (i.e. -OPhC(CN)₂PhO-), 3methylphenyl, methylenebis(4-phenyloxy) (i.e. -OPhCH₂PhO-), ethylphenyl, phenylethenyl, 3-formyl-2-thienyl, 2-hexyl-5-furanyl; hexamethylene-1,6-bis(4-phenyloxy) (i.e. -OPh(CH₂)₆PhO-); 4-hydroxymethylphenyl (i.e. 4-HOCH₂Ph-), 4-mercaptomethylphemyl (i.e. 4-HSCH₂Ph-), 4-methylthiophenyl (i.e. 4-CH₃SPh-), methoxyphenyl, methoxycarbonylphenyloxy (e.g. methyl salicyl), nitromethylphenyl (i.e. -PhCH₂NO₂), trimethylsilylphenyl, t-butyldimethylsilylphenyl, vinylphenyl, vinylidenebis(phenyl), and the like. The term "a C₃ - C₁₀ aromatic radical" includes substituted aromatic radicals and unsubstituted aromatic radicals containing at least three but no more than 10 carbon atoms. The aromatic radical 1-imidazolyl (C₃H₂N₂-) represents a C₃ aromatic radical. The benzyl radical (C₇H₈-) represents a C₇ aromatic radical.

As used herein the term "cycloaliphatic radical" refers to a radical having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethy group (C₆H₁₁CH₂-) is an cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. Cycloaliphatic radicals may be "substituted" or "unsubstituted". A substituted cycloaliphatic radical is defined as a cycloaliphatic radical, which comprises at least one substituent. A substituted cycloaliphatic radical may comprise as many substituents as there are positions available on the cycloaliphatic radical for substitution. Substituents, which may be present on a cycloaliphatic radical, include but are not limited to halogen atoms such as fluorine, chlorine, bromine, and iodine. Substituted cycloaliphatic radicals include trifluoromethylcyclohexyl, hexafluoroisopropylidenebis(4-cyclohexyloxy) (i.e. -OC₆H₁₁C(CF₃)₂C₆H₁₁O-), chloromethylcyclohexyl; 3-trifluorovinyl-2-cyclopropyl; 3-trichloromethylcyclohexyl (i.e. 3-CCl₃C₆H₁₁-), bromopropylcyclohexyl (i.e. BrCH₂CH₂CH₂C₆H)₁₁-), and the like. For convenience, the term "unsubstituted cycloaliphatic radical" is defined herein to encompass a wide range of functional groups. Examples of unsubstituted cycloaliphatic radicals include 4-allyloxycyclohexyl, aminocyclohexyl (i.e. H₂N C₆H₁₁-), aminocarbonylcyclopenyl (i.e. NH₂COC₅H₉-), 4-acetyloxycyclohexyl, dicyanoisopropylidenebis(4-cyclohexyloxy) (i.e. -OC₆H₁₁C(CN)₂C₆H₁₁O-), 3-methylcyclohexyl, methylenebis(4-cyclohexyloxy) (i.e. -OC₆H₁₁CH₂C₆H₁₁O-), ethylcyclobutyl, cyclopropylethenyl, 3-formyl-2-terahydrofuranyl, 2-hexyl-5-tetrahydrofuranyl; hexamethylene-1,6-bis(4-cyclohexyloxy) (i.e. -OC₆H₁₁(CH₂)₆ C₆H₁₁O-); 4-hydroxymethylcyclohexyl (i.e. 4-HOCH₂C₆H₁₁-), 4-mercaptomethylcyclohexyl (i.e. 4-HSCH₂C₆H₁₁-), 4-methylthiocyclohexyl (i.e. 4-CH₃SC₆H₁₁-), 4-methoxycyclohexyl, 2-methoxycarbonylcyclohexyloxy (2-CH₃OCO C₆H₁₁O-), nitromethylcyclohexyl (i.e. NO₂CH₂C₆H₁₀-), trimethylsilylcyclohexyl, t-butyldimethylsilylcyclopentyl, 4-trimethoxysilyethylcyclohexyl (e.g. (CH₃O)₃SiCH₂CH₂C₆H₁₀-), vinylcyclohexenyl, vinylidenebis(cyclohexyl), and the like. The term "a C₃ - C₁₀ cycloaliphatic radical" includes substituted cycloaliphatic radicals and unsubstituted cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

As used herein the term "hydrocarbyl" is defined as a monovalent moiety formed by removing a hydrogen atom from a hydrocarbon. Representative hydrocarbyls are alkyl groups having 1 to 25 carbon atoms, such as methyl, ethyl, propyl, butyl, pentyl, hexyl, heptyl, octyl, nonyl, undecyl, decyl, dodecyl, octadecyl, nonadecyl, eicosyl, heneicosyl, docosyl, tricosyl, and the isomeric forms thereof; aryl groups having 6 to 25 carbon atoms, such as ring-substituted and ring-unsubstituted forms of phenyl, tolyl, xylyl, naphthyl, biphenyl, tetraphenyl, and the like; aralkyl groups having 7 to 25 carbon atoms, such as ring-substituted and ring-unsubtituted forms of benzyl, phenethyl, phenpropyl, phenbutyl, naphthoctyl, and the like; and cycloalkyl groups, such as cyclopropyl, cyclobutyl, cyclopentyl, cyclohexyl, cycloheptyl, cyclooctyl, and the like. The term "aryl' as used herein refers to various forms of aromatic groups that have been described hereinabove for the "hydrocarbyl" group.

The term "alkyl" as used in the various embodiments of the present invention is intended to designate both linear alkyl, branched alkyl, aralkyl, cycloalkyl, bicycloalkyl, tricycloalkyl and polycycloalkyl radicals containing carbon and hydrogen atoms, and optionally containing atoms in addition to carbon and hydrogen, for example atoms selected from Groups 15, 16 and 17 of the Periodic Table. The term "alkyl" also encompasses that alkyl portion of alkoxide groups. In various embodiments normal and branched alkyl radicals are those containing from 1 to about 32 carbon atoms, and include as illustrative non-limiting examples C1-C32 alkyl optionally substituted with one or more groups selected from C1-C32 alkyl, C3-C15 cycloalkyl or aryl; and C3-C15 cycloalkyl optionally substituted with one or more groups selected from C1-C32 alkyl. Some particular illustrative examples comprise methyl, ethyl, n-propyl, isopropyl, n-butyl, sec-butyl, tertiary-butyl, pentyl, neopentyl, hexyl, heptyl, octyl, nonyl, decyl, undecyl and dodecyl. Some illustrative non-limiting examples of cycloalkyl and bicycloalkyl radicals include cyclobutyl, cyclopentyl, cyclohexyl, methylcyclohexyl, cycloheptyl, bicycloheptyl and adamantyl. In various embodiments aralkyl radicals are those containing from 7 to about 14 carbon atoms; these include, but are not limited to, benzyl, phenylbutyl, phenylpropyl, and phenylethyl. In various embodiments aryl radicals used in the various embodiments of the present invention are those substituted or unsubstituted aryl radicals containing from 6 to 18 ring carbon atoms. Some illustrative non-limiting examples of these aryl radicals include C6-C15 aryl optionally substituted with one or more groups selected from C1-C32 alkyl, C3-C15 cycloalkyl or aryl. Some particular illustrative examples of aryl radicals comprise substituted or unsubstituted phenyl, biphenyl, toluyl and naphthyl.

According to one embodiment of the present invention, a composition of matter comprising a thermoplastic resin composition derived from (i) a polyester derived from a diol comprising cyclohexane dimethanol and a diacid; (ii) a copolycarbonate derived from a 2-hydrocarbyl-3,3-bis(hydroxyaryl)phthalimidine and a second aromatic dihydroxy compound; (iii) a thermoplastic resin, C wherein the thermoplastic resin C is selected from the group consisting of a homopolycarbonate, a poly(estercarbonate), a poly(arylatecarbonate) and combinations thereof; and wherein the resin composition is transparent is disclosed.

Typically such polyester resins are derived from a cycloaliphatic diol, or a mixture of a cycloaliphatic diol and aromatic or aliphatic diols, containing from 2 to about 10 carbon atoms and at least one aromatic dicarboxylic acid. In one embodiment of the present invention, the polyesters are derived from cyclohexane dimenthanol. In one embodiment, the diol is a 1,4-cyclohexane dimethanol and particularly its cis- and trans-isomers. In another embodiment the cyclohexane dimethanol is at least about 20 mole percent of the total diol mixture present in the polyester. Preferred polyesters have repeating units according to structural formula (I) 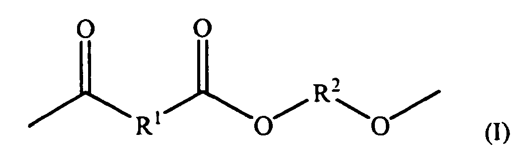 wherein, R¹ and R² are independently at each occurrence an aliphatic, an aromatic or a cycloaliphatic groups. In one embodiment, R² is an alkyl radical compromising a dehydroxylated residue derived from cyclohexane dimethanol, in another embodiment the R² can be a dehydroxylated residue derived from cyclohexane dimethanol and an aliphatic, aromatic or cycloaliphatic diol, or mixtures thereof, containing from 2 to about 20 carbon atoms. R¹ is an aryl radical comprising a decarboxylated residue derived from an aromatic dicarboxylic acid. The polyester is a condensation product where R¹ is the decarboxylated residue derived from an aryl, aliphatic or cycloalkane containing diacid of 6 to 20 carbon atoms or chemical equivalent thereof. The polyester resins are typically obtained through the condensation or ester interchange polymerization of a diol or diol equivalent component with a diacid or diacid chemical equivalent component.

The diacids meant to include carboxylic acids having two carboxyl groups each useful in the preparation of the polyester resins of the present invention are preferably aliphatic, aromatic, cycloaliphatic. Examples of diacids are cyclo or bicyclo aliphatic acids, for example, naphthalene dicarboxylic acids, norbornene dicarboxylic acids, bicyclo octane dicarboxylic acids, 1,4-cyclohexanedicarboxylic acid or chemical equivalents, and most preferred is trans-1,4-cyclohexanedicarboxylic acid or a chemical equivalent. Linear dicarboxylic acids like adipic acid, azelaic acid, dicarboxyl dodecanoic acid, and succinic acid may also be useful. Chemical equivalents of these diacids include esters, alkyl esters, e.g., dialkyl esters, diaryl esters, anhydrides, salts, acid chlorides, acid bromides, and the like. Examples of aromatic dicarboxylic acids from which the decarboxylated residue R¹ may be derived are acids that contain a single aromatic ring per molecule such as, e.g., isophthalic or terephthalic acid, 1,2-di(p-carboxyphenyl)ethane, 4,4'-dicarboxydiphenyl ether, 4,4'- bisbenzoic acid and mixtures thereof, as well as acids contain fused rings such as, e.g. 1,4-, 1,5-, or 2,6-naphthalene dicarboxylic acids. Preferred dicarboxylic acids include terephthalic acid, isophthalic acid, naphthalene dicarboxylic acids, and the like, and mixtures comprising at least one of the foregoing dicarboxylic acids.

Examples of the polyvalent carboxylic acid include, but are not limited to, an aromatic polyvalent carboxylic acid, an aromatic oxycarboxylic acid, an aliphatic dicarboxylic acid, and an alicyclic dicarboxylic acid, including terephthalic acid, isophthalic acid, ortho- phthalic acid, 1,5- naphthalenedicarboxylic acid, 2,6-naphthalenedicarboxylic acid, stilbenedicarboxylic acid, diphenic acid, sulfoterephthalic acid, 5- sulfoisophthalic acid, 4-sulfophthalic acid, 4-sulfonaphthalene 2,7- dicarboxylic acid, 5-[4-sulfophenoxy] isophthalic acid, sulfoterephthalic acid, p-oxybenzoic acid, p-(hydroxyethoxy)benzoic acid, succinic acid, adipic acid, azelaic acid, sebacic acid, dodecanedicarboxylic acid, fumaric acid, maleic acid, itaconic acid, hexahydrophthalic acid, tetrahydrophthalic acid, trimellitic acid, trimesic acid, and pyrromellitic acid. These may be used in the form of metal salts and ammonium salts and the like.

In one embodiment of the present invention, the diacids are selected from the group consisting of linear acids, terephthalic acids, isophthalic acids, phthalic acids, naphthalic acids, cycloaliphatic acids, bicyclo aliphatic acids, decahydro naphthalene dicarboxylic acids, norbornene dicarboxylic acids, bicyclo octane dicarboxylic acids, 1,4-cyclohexanedicarboxylic acid, adipic acid, azelaic acid, dicarboxyl dodecanoic acid, stilbene dicarboxylic acid, succinic acid, chemical equivalents of the foregoing, and combinations thereof.

In one embodiment, the polyester comprises cyclohexane dimethanol and an additional diol. Some of the additional diols useful in the preparation of the polyester resins of the present invention are straight chain, branched, or cycloaliphatic alkane diols and may contain from 2 to 12 carbon atoms. Examples of such diols include but are not limited to ethylene glycol; propylene glycol, i.e., 1, 2- and 1,3-propylene glycol; 2,2-dimethyl-1,3- propane diol; 2-ethyl, 2- methyl, 1,3-propane diol; 1,3- and 1,5-pentane diol; dipropylene glycol; 2-methyl-1,5-pentane diol; 1,6-hexane diol; dimethanol decalin, dimethanol bicyclo octane; triethylene glycol; 1,10- decane diol; and mixtures of any of the foregoing. In one embodiment, the diol include glycols, such as ethylene glycol, propylene glycol, butanediol, hydroquinone, resorcinol, trimethylene glycol, 2-methyl-1,3-propane glycol, 1,4- butanediol, hexamethylene glycol, decamethylene glycol, 1,4-cyclohexane dimethanol, or neopentylene glycol. Chemical equivalents to the diols include esters, such as dialkylesters, diaryl esters, and the like. Examples of the polyvalent alcohol include, but are not limited to, an aliphatic polyvalent alcohol, an alicyclic polyvalent alcohol, and an aromatic polyvalent alcohol, including ethylene glycol, propylene glycol, 1,3-propanediol, 2,3-butanediol, 1,4-butanediol, 1,5-pentanediol, 1,6- hexanediol, neopentyl glycol, diethylene glycol, dipropylene glycol, 2,2, 4-trimethyl-1, 3-pentanediol, polyethylene glycol, polypropylene glycol, polytetramethylene glycol, trimethylolethane, trimethylolpropane, glycerin, pentaerythritol, 1,4- cyclohexanediol, spiroglycol, tricyclodecanediol, tricyclodecanedimethanol, m-xylene glycol, o-xylene glycol, p-xylene glycol 1,4-phenylene glycol, bisphenol A, lactone polyester and polyols. The additional diol is present in an amount ranging from about 0 to about 70 mole percent. In one embodiment, the diol, cyclohexanedimethanol, component can contain up to at least about 20 mole %, preferably up to about 20-100 mole %. As such, the composition can contain additional polyesters. In one embodiment, for instance, the composition further comprises at least one polyester derived from a diol comprising cyclohexane dimethanol and a diacid.

In one embodiment, the additional diol can be a polyhydric alcohol. In yet another embodiment the polyester resin obtained by polymerizing the polybasic carboxylic acids and the diol either singly or in combination respectively, a resin obtained by capping the polar group in the end of the polymer chain using an ordinary compound capable of capping an end can also be used.

Block copolyester resin components are also useful, and can be prepared by the transesterification of (a) straight or branched chain poly(alkylene terephthalate) and (b) a copolyester of a linear aliphatic dicarboxylic acid and, optionally, an aromatic dibasic acid such as terephthalic or isophthalic acid with a mixture of cyclohexane dimethanol and one or more straight or branched chain dihydric aliphatic glycols. Especially useful when high melt strength is important are branched high melt viscosity resins, which include a small amount of, e.g., up to 5 mole percent based on the acid units of a branching component containing at least three ester forming groups. The branching component can be one that provides branching in the acid unit portion of the polyester, in the glycol unit portion, or it can be a hybrid branching agent that includes both acid and alcohol functionality. Illustrative of such branching components are tricarboxylic acids, such as trimesic acid, and lower alkyl esters thereof, and the like; tetracarboxylic acids, such as pyromellitic acid, and lower alkyl esters thereof, and the like; or preferably, polyols, and especially preferably, tetrols, such as pentaerythritol; triols, such as trimethylolpropane; dihydroxy carboxylic acids; and hydroxydicarboxylic acids and derivatives, such as dimethyl hydroxyterephthalate, and the like. In addition to terephthalic acid units, small amounts, e.g., from 0.5 to 15 mole percent of other aromatic dicarboxylic acids, such as isophthalic acid or naphthalene dicarboxylic acid, or aliphatic dicarboxylic acids, such as adipic acid, can also be present, as well as a minor amount of diol component other than that derived from 1,4-butanediol, such as ethylene glycol or cyclohexylenedimethanol, etc., as well as minor amounts of trifunctional, or higher, branching components, e.g., pentaerythritol, trimethyl trimesate, and the like

The polyesters in one embodiment of the present invention, may be a polyether ester block copolymer consisting of a thermoplastic polyester as the hard segment and a polyalkylene glycol as the soft segment. It may also be a three-component copolymer obtained from at least one dicarboxylic acid selected from: aromatic dicarboxylic acids such as terephthalic acid, isophthalic acid, phthalic acid, naphthalene-2,6- dicarboxylic acid, naphthalene-2,7-dicarboxylic acid, diphenyl-4,4- dicarboxylic acid, diphenoxyethanedicarboxylic acid or 3-sulfoisophthalic acid, alicyclic dicarboxylic acids such as 1,4-cyclohexanedicarboxylic acid, aliphatic dicarboxylic acids such as succinic acid, oxalic acid, adipic acid, sebacic acid, dodecanedicarboxylic acid or dimeric acid, and ester- forming derivatives thereof; cyclohexane dimethanol and at least one diol selected from: aliphatic diols such as 1,4-butanediol, ethylene glycol, trimethylene glycol, tetramethylene glycol, pentamethylene glycol, hexamethylene glycol, neopentyl glycol or decamethylene glycol, alicyclic diols such as 1,1- cyclohexanedimethanol, or tricyclodecanedimethanol, and ester-forming derivatives thereof; and at least one poly(alkylene oxide) glycol selected from: polyethylene glycol or poly(1,2- and 1,3-propylene oxide) glycol with an average molecular weight of about 400-5000, ethylene oxide-propylene oxide copolymer, and ethylene oxide-tetrahydrofuran copolymer.

Typically the polyester can have a number average molecular weight of about 5,000 atomic mass units (AMU) to about 200,000 AMU, as measured by gel permeation chromatography using polystyrene standards. Within this range, a number average molecular weight of at least about 8000 AMU is preferred. Also within this range, a number average molecular weight of up to about 100,000 AMU is preferred, and a number average molecular weight of up to about 50,000 AMU is more preferred.) It is contemplated that the polyesters have various known end groups. The preferred polyesters preferably have an intrinsic viscosity (as measured in 60: 40 solvent mixture of phenol/tetrachloroethane at 25°C) ranging from about 0.05 to about 1.5 deciliters per gram.

The polyester can be present in the composition from about 20 to about 80 weight percent, based on the total weight of the composition.

In one embodiment, the thermoplastic resin composition comprises about 5 weight percent to about 80 weight percent of a copolycarbonate derived from about 20 weight percent to about 70 weight percent of a 2-hydrocarbyl-3,3-bis(hydroxyaryl)phthalimidine and from about 30 weight percent to about 80 weight percent of a second aromatic dihydroxy compound.

Phenolphthalein has been used as an aromatic dihydroxy compound monomer for preparing copolycarbonates, which are generally, characterized with excellent ductility and high glass transition temperatures. Certain derivatives of phenolphthalein have also been used as aromatic dihydroxy compound monomers to prepare copolycarbonate resins as well as polyarylate resins. In one embodiment, the copolycarbonate have been prepared by an interfacial polycondensation method using monomers such as 3,3-bis(4-hydroxyphenyl)phthalimidine and/ or 2-phenyl-3,3-bis(4-hydroxyphenyl)phthalimidine (hereinafter sometimes referred to as "para, para-PPPBP") and a second aromatic dihydroxy compound that is not 2-phenyl-3,3-bis(4-hydroxyphenyl)phthalimidine.

The 2-hydrocarbyl-3,3-bis(hydroxyaryl)phthalimidine (hereinafter sometimes referred to as "para,para-PPPBP") are phenolphthalein derivatives of formula (II): 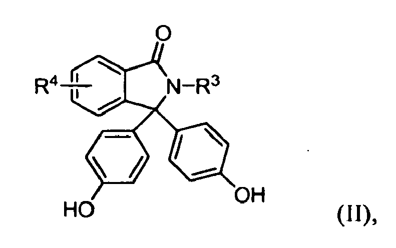 wherein R³ is selected from a group consisting of a hydrogen and a hydrocarbyl group, and R⁴ is selected from the group consisting of a hydrogen, a hydrocarbyl group, and a halogen. By way of example, 2-aryl-3,3-bis(4-hydroxyaryl)phthalimidines can generally be prepared by reaction of an aromatic amine (also referred to herein as "aryl amine"), e.g., an aniline, of formula (III): 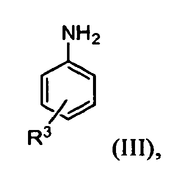 wherein R³ is as defined above; with a phenolphthalein of formula (IV): 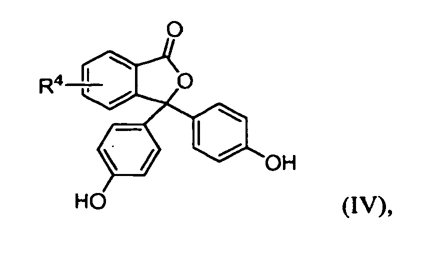 wherein R⁴ is as previously defined. An acid catalyst is generally used to facilitate formation of the phthalimidine product. The 2-hydrocarbyl-3,3-bis(4-hydroxyaryl) phthalimidine product is at least 97.5 area percent pure 2-hydrocarbyl-3,3-bis(4-hydroxyaryl)phthalimidine in one embodiment, and at least 98 area percent pure in another embodiment. The chemical structure of (2-hydroxyaryl)(4-hydroxyaryl)phthalimidine by-product is shown in formula (V) below. 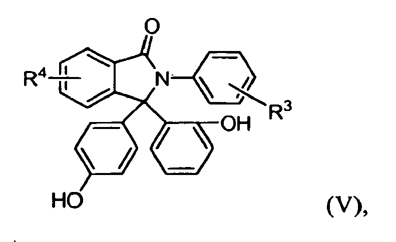 wherein R³ and R⁴ are as previously described.

By way of example, phenolphthalein (R⁴ is H, R³ is phenyl in formula (IV)) was reacted with aniline (R³ is H in formula (III)) in the presence of aniline hydrochloride as the catalyst to form 2-phenyl-3,3-bis(4-hydroxyphenyl)phthalimidine (i.e., para,para-PPPBP), as shown in formula (VI). In one embodiment, the 2-hydrocarbyl-3,3-bis(4-hydroxyaryl)phthalimidine is a 2-phenyl-3,3-bis(4-hydroxyphenyl)phthalimidine.

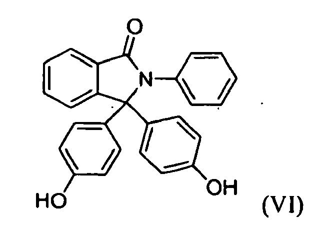

The 2-hydrocarbyl-3,3-bis(4-hydroxyaryl)phthalimidine preferably comprises less than or equal to 1,000 parts per million of the 2-hydrocarbyl-3-{(4-hydroxyaryl)(2-hydroxyaryl)}phthalimidine isomeric impurity. Further, the purified 2-hydrocarbyl-3,3-bis(4-hydroxyaryl)phthalimidine preferably comprises less than or equal to 1,000 parts per million of the phenolphthalein starting material. In another embodiment, the 2-hydrocarbyl-3,3-bis(4-hydroxyaryl)phthalimidine, which has a relatively low level of the 2-hydrocarbyl-3-1(4-hydroxyaryl)(2-hydroxyaryl)lphthalimidine impurity, e.g., less than 1,000 parts per million. In general the para, para-PPPBP has an undetectable level of ortho, para-PPPBP (as measured by HPLC technique). In one embodiment, the purified para, para-PPPBP can also comprise up to 1,000 parts per million of phenolphthalein.

In one embodiment, the second aromatic dihydroxy compound is represented by the general formula (VII): 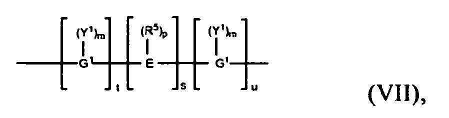 wherein each G¹ is an independently aromatic group; E is selected from the group consisting of an alkylene group, an alkylidene group, a cycloaliphatic group, a sulfur-containing linkage group, a phosphorus-containing linkage group, an ether linkage group, a carbonyl group, a tertiary nitrogen group, and a silicon-containing linkage group; R⁵ is a hydrogen or a monovalent hydrocarbon group each; Y¹ is independently selected from the groups consisting of a monovalent hydrocarbyl group, an alkenyl group, an allyl group, a halogen, an oxy group and a nitro group; each m is independently a whole number from zero through the number of positions on each respective G¹ available for substitution; p is a whole number from zero through the number of positions on E available for substitution; t is a natural number greater than or equal to one; s is either zero or one; and u is a whole number.

Suitable examples of E include cyclopentylidene, cyclohexylidene, 3,3,5-trimethylcyclohexylidene, methylcyclohexylidene, 2-[2.2.1]-bicycloheptylidene, neopentylidene, cyclopentadecylidene, cyclododecylidene, and adamantylidene; a sulfur-containing linkage such as sulfide, sulfoxide or sulfone, a phosphorus-containing linkage such as phosphinyl, phosphonyl, an ether linkage, a carbonyl group, a tertiary nitrogen group, and a silicon-containing linkage such as a silane or siloxy linkage.

In the aromatic dihydroxy comonomer compound shown in Formula (VII), when more than one Y¹ substituent is present, they may be the same or different. The same holds true for the R⁵ substituent. Where "s" is zero in formula (VII) and "u" is not zero, the aromatic rings are directly joined with no intervening alkylidene or other bridge. The positions of the hydroxyl groups and Y¹ on the aromatic nuclear residues G¹ can be varied in the ortho, meta, or para positions and the groupings can be in vicinal, asymmetrical or symmetrical relationship, where two or more ring carbon atoms of the hydrocarbon residue are substituted with Y¹ and hydroxyl groups. In some embodiments, the parameters "t," "s," and "u" are each one; both G¹ radicals are unsubstituted phenylene radicals; and E is an alkylidene group such as isopropylidene. In particular embodiments, both G¹ radicals are p-phenylene, although both may be ortho- or meta-phenylene or one ortho- or meta-phenylene and the other para-phenylene.

Some illustrative, non-limiting examples of aromatic dihydroxy compounds of formula (VII) include the dihydroxy-substituted aromatic hydrocarbons disclosed by name or formula (generic or specific) in US. Pat. No 4,217,438. Some particular examples of aromatic dihydroxy compound co-monomers include, but are not intended to be limited to, 2,4'-dihydroxydiphenylmethane, bis(2-hydroxyphenyl)methane, bis(4-hydroxyphenyl)methane, bis(4-hydroxy-5-nitrophenyl)methane, bis(4-hydroxy-2,6-dimethyl-3-methoxyphenyl)methane, 1,1-bis(4-hydroxyphenyl)ethane, 1,1-bis(4-hydroxy-2-chlorophenyl)ethane, 2,2-bis(4-hydroxyphenyl)propane (bisphenol A); 2,2-bis(3-chloro-4-hydroxyphenyl)propane; 2,2-bis(3-bromo-4-hydroxyphenyl)propane; 2,2-bis(4-hydroxy-3-methylphenyl)propane; 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 2,2-bis(3,5-dichloro-4-hydroxyphenyl)propane; 2,2-bis(3,5-dibromo-4-hydroxyphenyl)propane; 2,2-bis(3,5-dimethyl-4-hydroxyphenyl)propane; 2,2-bis(3-chloro-4-hydroxy-5-methylphenyl)propane; 2,2-bis(3-bromo-4-hydroxy-5-methylphenyl)propane; 2,2-bis(3-chloro-4-hydroxy-5-isopropylphenyl)propane; 2,2-bis(3-bromo-4-hydroxy-5-isopropylphenyl)propane; 2,2-bis(3-t-butyl-5-chloro-4-hydroxyphenyl)propane; 2,2-bis(3-bromo-5-t-butyl-4-hydroxyphenyl)propane; 2,2-bis(3-chloro-5-phenyl-4-hydroxyphenyl)propane; 2,2-bis(3-bromo-5-phenyl-4-hydroxyphenyl)propane; 2,2-bis(3,5-disopropyl-4-hydroxyphenyl)propane; 2,2-bis(3,5-di-t-butyl-4-hydroxyphenyl)propane; 2,2-bis(3,5-diphenyl-4-hydroxyphenyl)propane; 2,2-bis(4-hydroxy-2,3,5,6-tetrachlorophenyl)propane; 2,2-bis(4-hydroxy-2,3,5,6-tetrabromophenyl)propane; 2,2-bis(4-hydroxy-2,3,5,6-tetramethylphenyl)propane; 2,2-bis(2,6-dichloro-3,5-dimethyl-4-hydroxyphenyl)propane; 2,2-bis(2,6-dibromo-3,5-dimethyl-4-hydroxyphenyl)propane; 2,2-bis(4-hydroxy-3-ethylphenyl)propane, 2,2-bis(4-hydroxy-3,5-dimethylphenyl)propane, 2,2-bis(3,5,3',5'-tetrachloro-4,4'-dihydroxyphenyl)propane, bis(4-hydroxyphenyl)cyclohexylmethane, 2,2-bis(4-hydroxyphenyl)-1-phenylpropane, 1,1-bis(4-hydroxyphenyl)cyclohexane; 1,1-bis(3-chloro-4-hydroxyphenyl)cyclohexane; 1,1-bis(3-bromo-4-hydroxyphenyl)cyclohexane; 1,1-bis(4-hydroxy-3-methylphenyl)cyclohexane; 1,1-bis(4-hydroxy-3-isopropylphenyl)cyclohexane; 1,1-bis(3-t-butyl-4-hydroxyphenyl)cyclohexane; 1,1-bis(3-phenyl-4-hydroxyphenyl)cyclohexane; 1,1-bis(3,5-dichloro-4-hydroxyphenyl)cyclohexane; 1,1-bis(3,5-dibromo-4-hydroxyphenyl)cyclohexane; 1,1-bis(4'-hydroxy-3'methylphenyl) cyclohexane (DMBPC), 1,1-bis(3,5-dimethyl-4-hydroxyphenyl)cyclohexane; 4,4'-[1-methyl-4-(1-methyl-ethyl)-1,3-cyclohexandiyl]bisphenol (1,3 BHPM), 4-[1-[3-(4-hydroxyphenyl)-4-methylcyclohexyl]-1-methyl-ethyl]-phenol (2,8 BHPM), 3,8-dihydroxy-5a,10b-diphenylcoumarano-2',3',2,3-coumarane (DCBP), 1,1-bis(3-chloro-4-hydroxy-5-methylphenyl)cyclohexane; 1,1-bis(3-bromo-4-hydroxy-5-methylphenyl)cyclohexane; 1,1-bis(3-chloro-4-hydroxy-5-isopropylphenyl)cyclohexane; 1,1-bis(3-bromo-4-hydroxy-5-isopropylphenyl)cyclohexane; 1,1-bis(3-t-butyl-5-chloro-4-hydroxyphenyl)cyclohexane; 1,1-bis(3-bromo-5-t-butyl-4-hydroxyphenyl)cyclohexane; 1,1-bis(3-chloro-5-phenyl-4-hydroxyphenyl)cyclohexane; 1,1-bis(3-bromo-5-phenyl-4-hydroxyphenyl)cyclohexane; 1,1-bis(3,5-disopropyl-4-hydroxyphenyl)cyclohexane; 1,1-bis(3,5-di-t-butyl-4-hydroxyphenyl)cyclohexane; 1,1-bis(3,5-diphenyl-4-hydroxyphenyl)cyclohexane; 1,1-bis(4-hydroxy-2,3,5,6-tetrachlorophenyl)cyclohexane; 1,1-bis(4-hydroxy-2,3,5,6-tetrabromophenyl)cyclohexane; 1,1-bis(4-hydroxy-2,3,5,6-tetramethylphenyl)cyclohexane; 1,1-bis(2,6-dichloro-3,5-dimethyl-4-hydroxyphenyl)cyclohexane; 1,1-bis(2,6-dibromo-3,5-dimethyl-4-hydroxyphenyl)cyclohexane; 1,1-bis(4-hydroxyphenyl)-3,3,5-trimethylcyclohexane; 1,1-bis(3-chloro-4-hydroxyphenyl)-3,3,5-trimethylcyclohexane; 1,1-bis(3-bromo-4-hydroxyphenyl)-3,3,5-trimethylcyclohexane; 1,1-bis(4-hydroxy-3-methylphenyl)-3,3,5-trimethylcyclohexane; 1,1-bis(4-hydroxy-3-isopropylphenyl)-3,3,5-trimethylcyclohexane; 1,1-bis(3-t-butyl-4-hydroxyphenyl)-3,3,5-trimethylcyclohexane; 1,1-bis(3-phenyl-4-hydroxyphenyl)-3,3,5-trimethylcyclohexane; 1,1-bis(3,5-dichloro-4-hydroxyphenyl)-3,3,5-trimethylcyclohexane; 1,1-bis(3,5-dibromo-4-hydroxyphenyl)-3,3,5-trimethylcyclohexane; 1,1-bis(3,5-dimethyl-4-hydroxyphenyl)-3,3,5-trimethylcyclohexane; 1,1-bis(3-chloro-4-hydroxy-5-methylphenyl)-3,3,5-trimethylcyclohexane; 1,1-bis(3-bromo-4-hydroxy-5-methylphenyl)-3,3,5-trimethylcyclohexane; 1,1-bis(3-chloro-4-hydroxy-5-isopropylphenyl)-3,3,5-trimethylcyclohexane; 1,1-bis(3-bromo-4-hydroxy-5-isopropylphenyl)-3,3,5-trimethylcyclohexane; 1,1-bis(3-t-butyl-5-chloro-4-hydroxyphenyl)-3,3,5-trimethylcyclohexane; 1,1-bis(3-bromo-5-t-butyl-4-hydroxyphenyl)-3,3,5-trimethylcyclohexane; bis(3-chloro-5-phenyl-4-hydroxyphenyl)-3,3,5-trimethylcyclohexane; 1,1-bis(3-bromo-5-phenyl-4-hydroxyphenyl)-3,3,5-trimethylcyclohexane; 1,1-bis(3,5-disopropyl-4-hydroxyphenyl)-3,3,5-trimethylcyclohexane; 1,1-bis(3,5-di-t-butyl-4-hydroxyphenyl)-3,3,5-trimethylcyclohexane; 1,1-bis(3,5-diphenyl-4-hydroxyphenyl)-3,3,5-trimethylcyclohexane; 1,1-bis(4-hydroxy-2,3,5,6-tetrachlorophenyl)-3,3,5-trimethylcyclohexane; 1,1-bis(4-hydroxy-2,3,5,6-tetrabromophenyl)-3,3,5-trimethylcyclohexane; 1,1-bis(4-hydroxy-2,3,5,6-tetramethylphenyl)-3,3,5-trimethylcyclohexane; 1,1-bis(2,6-dichloro-3,5-dimethyl-4-hydroxyphenyl)-3,3,5-trimethylcyclohexane; 1,1-bis(2,6-dibromo-3,5-dimethyl-4-hydroxyphenyl)-3,3,5-trimethylcyclohexane; 4,4-bis(4-hydroxyphenyl)heptane, 4,4'dihydroxy-1,1-biphenyl; 4,4'-dihydroxy-3,3'-dimethyl-1,1-biphenyl; 4,4'-dihydroxy-3,3'-dioctyl-1,1-biphenyl; 4,4'-(3,3,5-trimethylcyclohexylidene)diphenol, 4,4'-bis(3,5-dimethyl)diphenol, 4,4'-dihydroxydiphenylether; 4,4'-dihydroxydiphenylthioether; 1,3-bis(2-(4-hydroxyphenyl)-2-propyl)benzene; 1,3-bis(2-(4-hydroxy-3-methylphenyl)-2-propyl)benzene; 1,4-bis(2-(4-hydroxyphenyl)-2-propyl)benzene, 1,4-bis(2-(4-hydroxy-3-methylphenyl)-2-propyl)benzene 2,4'-dihydroxyphenyl sulfone, 4,4'-dihydroxydiphenylsulfone (BPS), bis(4-hydroxyphenyl)methane, 2,6-dihydroxy naphthalene; hydroquinone; resorcinol, C1-3 alkyl-substituted resorcinols, 3-(4-hydroxyphenyl)-1,1,3-trimethylindan-5-ol, 1-(4-hydroxyphenyl)-1,3,3-trimethylindan-5-ol, and 2,2,2',2'-tetrahydro-3,3,3',3'-tetramethyl-1,1'-spirobi[1H-indene]-6,6'-diol.

In some embodiments, an isosorbide comonomer can be used with the 2-hydrocarbyl-3,3-bis(4-hydroxyaryl)phthalimidine monomer to produce polycarbonate copolymers. Isosorbide, sometimes also called 1,4:3,6-dianhydo-D-glucitol, is a rigid, chemically, and thermally stable aliphatic diol that tends to produce copolymers having higher glass transition temperatures, as compared to comonomer compositions which do not include isosorbide. In one embodiment, the second aromatic dihydroxy compound is Bisphenol A (BPA).

In one embodiment, the thermoplastic resin composition comprises about 0 weight percent to about 70 weight percent of a thermoplastic resin C, wherein the thermoplastic resin C is selected from the group consisting of a homopolycarbonate, a poly(estercarbonate), a poly(arylatecarbonate) and combinations thereof.

In one embodiment, the thermoplastic resin C is a polycarbonate, in another embodiment the thermoplastic resin C, is an aromatic polycarbonate. The aromatic polycarbonate suitable for use in the present invention, methods of making polycarbonate resins and the use of polycarbonate resins in thermoplastic molding compounds are well known in the art, see, generally, US. Pat. Nos. 3,169,121, 4,487,896 and 5,411,999, the respective disclosures of which are each incorporated herein by reference. In one embodiment, the thermoplastic resin C is derived from the second aromatic dihydroxy compound.

Polycarbonates useful in the invention comprise repeating units of the formula (VIII) 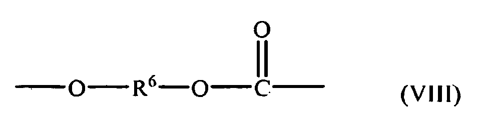 wherein R⁶ is a divalent aromatic radical derived from a dihydroxyaromatic compound of the formula HO-D-OH, wherein D has the structure of formula: 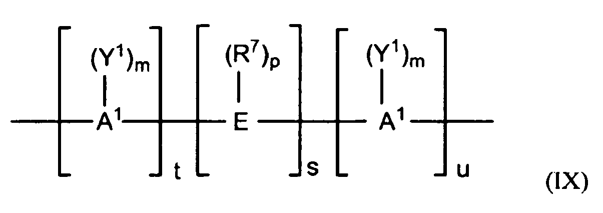 wherein A¹ represents an aromatic group including, but not limited to, phenylene, biphenylene, naphthylene, and the like. In some embodiments E may be an alkylene or alkylidene group including, but not limited to, methylene, ethylene, ethylidene, propylene, propylidene, isopropylidene, butylene, butylidene, isobutylidene, amylene, amylidene, isoamylidene, and the like. In other embodiments when E is an alkylene or alkylidene group, it may also consist of two or more alkylene or alkylidene groups connected by a moiety different from alkylene or alkylidene, including, but not limited to, an aromatic linkage; a tertiary nitrogen linkage; an ether linkage; a carbonyl linkage; a silicon-containing linkage, silane, siloxy; or a sulfur-containing linkage including, but not limited to, sulfide, sulfoxide, sulfone, and the like; or a phosphorus-containing linkage including, but not limited to, phosphinyl, phosphonyl, and the like. In other embodiments E may be a cycloaliphatic group including, but not limited to, cyclopentylidene, cyclohexylidene, 3,3,5-trimethylcyclohexylidene, methylcyclohexylidene, 2-[2.2.1]-bicycloheptylidene, neopentylidene, cyclopentadecylidene, cyclododecylidene, adamantylidene, and the like; a sulfur-containing linkage, including, but not limited to, sulfide, sulfoxide or sulfone; a phosphorus-containing linkage, including, but not limited to, phosphinyl or phosphonyl; an ether linkage; a carbonyl group; a tertiary nitrogen group; or a silicon-containing linkage including, but not limited to, silane or siloxy. R⁷ independently at each occurrence comprises a monovalent hydrocarbon group including, but not limited to, alkenyl, allyl, alkyl, aryl, aralkyl, alkaryl, or cycloalkyl. In various embodiments a monovalent hydrocarbon group of R⁷ may be halogen-substituted, particularly fluoro- or chloro-substituted, for example as in dichloroalkylidene, particularly gem-dichloroalkylidene. Y¹ independently at each occurrence may be an inorganic atom including, but not limited to, halogen (fluorine, bromine, chlorine, iodine); an inorganic group containing more than one inorganic atom including, but not limited to, nitro; an organic group including, but not limited to, a monovalent hydrocarbon group including, but not limited to, alkenyl, allyl, alkyl, aryl, aralkyl, alkaryl, or cycloalkyl, or an oxy group including, but not limited to, OR⁸ wherein R⁸ is a monovalent hydrocarbon group including, but not limited to, alkyl, aryl, aralkyl, alkaryl, or cycloalkyl; it being only necessary that Y¹ be inert to and unaffected by the reactants and reaction conditions used to prepare the polymer. In some particular embodiments Y¹ comprises a halo group or C₁-C₆ alkyl group. The letter "m" represents any integer from and including zero through the number of replaceable hydrogens on A¹ available for substitution; "p" represents an integer from and including zero through the number of replaceable hydrogens on E available for substitution; "t" represents an integer equal to at least one; "s" represents an integer equal to either zero or one; and "u" represents any integer including zero.

In dihydroxy-substituted aromatic hydrocarbons in which D is represented by formula (IX) above, when more than one Y¹ substituent is present, they may be the same or different. The same holds true for the R⁷ substituent. Where "s" is zero in formula (IX) and "u" is not zero, the aromatic rings are directly joined by a covalent bond with no intervening alkylidene or other bridge. The positions of the hydroxyl groups and Y¹ on the aromatic nuclear residues A¹ can be varied in the ortho, meta, or para positions and the groupings can be in vicinal, asymmetrical or symmetrical relationship, where two or more ring carbon atoms of the hydrocarbon residue are substituted with Y¹ and hydroxyl groups. In some particular embodiments the parameters "t", "s", and "u" each have the value of one; both A¹ radicals are unsubstituted phenylene radicals; and E is an alkylidene group such as isopropylidene. In some particular embodiments both A¹ radicals are p-phenylene, although both may be o- or m-phenylene or one o- or m-phenylene and the other p-phenylene.

In some embodiments of dihydroxy-substituted aromatic hydrocarbons E may be an unsaturated alkylidene group. Suitable dihydroxy-substituted aromatic hydrocarbons of this type include those of the formula (X): 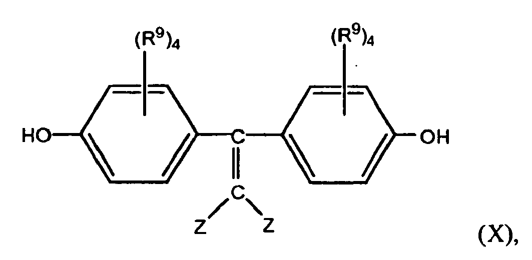 wherein independently each R⁹ is hydrogen, chlorine, bromine or a C₁₋₃₀ monovalent hydrocarbon or hydrocarbonoxy group, each Z is hydrogen, chlorine or bromine, subject to the provision that at least one Z is chlorine or bromine.

Suitable dihydroxy-substituted aromatic hydrocarbons also include those of the formula (XI): 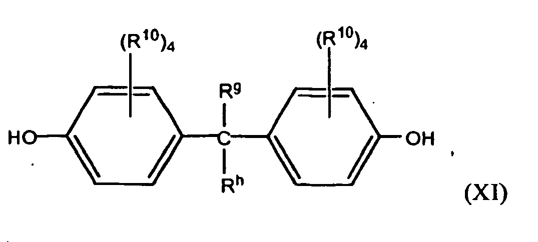 wherein independently each R¹⁰ is as defined hereinbefore, and independently R^{g} and R^{h} are hydrogen or a C 1-30 hydrocarbon group.

In some embodiments of the present invention, dihydroxy-substituted aromatic hydrocarbons that may be used comprise those disclosed by name or formula (generic or specific) in US. Pat. Nos. 2,991,273, 2,999,835, 3,028,365, 3,148,172, 3,153,008, 3,271,367, 3,271,368, and 4,217,438. In other embodiments of the invention, dihydroxy-substituted aromatic hydrocarbons comprise bis(4-hydroxyphenyl)sulfide, bis(4-hydroxyphenyl) ether, bis(4-hydroxyphenyl)sulfone, bis(4-hydroxyphenyl)sulfoxide, 1,4-dihydroxybenzene, 4,4'-oxydiphenol, 2,2-bis(4-hydroxyphenyl)hexafluoropropane, 4,4'-(3,3,5-trimethylcyclohexylidene)diphenol; 4,4'-bis(3,5-dimethyl)diphenol, 1,1-bis(4-hydroxy-3-methylphenyl)cyclohexane; 4,4-bis(4-hydroxyphenyl)heptane; 2,4'-dihydroxydiphenylmethane; bis(2-hydroxyphenyl)methane; bis(4-hydroxyphenyl)methane; bis(4-hydroxy-5-nitrophenyl)methane; bis(4-hydroxy-2,6-dimethyl-3-methoxyphenyl)methane; 1,1-bis(4-hydroxyphcnyl)ethane; 1,2-bis(4-hydroxyphenyl)ethane; 1,1-bis(4-hydroxy-2-chlorophenyl)ethane; 2,2-bis(3-phenyl-4-hydroxyphenyl)propane; 2,2-bis(4-hydroxy-3-methylphenyl)propane; 2,2-bis(4-hydroxy-3-ethylphenyl)propane; 2,2-bis(4-hydroxy-3-isopropylphenyl)propane; 2,2-bis(4-hydroxy-3,5-dimethylphenyl)propane; 3,5,3',5'-tetrachloro-4,4'-dihydroxyphenyl)propane; bis(4-hydroxyphenyl)cyclohexylmethane; 2,2-bis(4-hydroxyphenyl)-1-phenylpropane; 2,4'-dihydroxyphenyl sulfone; dihydroxy naphthalene; 2,6-dihydroxy naphthalene; hydroquinone; resorcinol; C1-3 alkyl-substituted resorcinols; methyl resorcinol, catechol, 1,4-dihydroxy-3-methylbenzene; 2,2-bis(4-hydroxyphenyl)butane; 2,2-bis(4-hydroxyphenyl)-2-methylbutane; 1,1-bis(4-hydroxyphenyl)cyclohexane; 4,4'-dihydroxydiphenyl; 2-(3-methyl-4-hydroxyphenyl-2-(4-hydroxyphenyl)propane; 2-(3,5-dimethyl-4-hydroxyphenyl)-2-(4-hydroxyphenyl)propane; 2-(3-methyl-4-hydroxyphenyl)-2-(3,5-dimethyl-4-hydroxyphenyl)propane; bis(3,5-dimethylphenyl-4-hydroxyphenyl)methane; 1,1-bis(3,5-dimethylphenyl-4-hydroxyphenyl)ethane; 2,2-bis(3,5-dimethylphenyl-4-hydroxyphenyl)propane; 2,4-bis(3,5-dimethylphenyl-4-hydroxyphenyl)-2-methylbutane; 3,3-bis(3,5-dimethylphenyl-4-hydroxyphenyl)pentane; 1,1-bis(3,5-dimethylphenyl-4-hydroxyphenyl)cyclopentane; 1,1-bis(3,5-dimethylphenyl4-hydroxyphenyl)cyclohexane; bis(3,5-dimethyl-4-hydroxyphenyl) sulfoxide, bis(3,5-dimethyl-4-hydroxyphenyl) sulfone and bis(3,5-dimethylphenyl-4-hydroxyphenyl)sulfide. In a particular embodiment the dihydroxy-substituted aromatic hydrocarbon comprises bisphenol A.

In some embodiments of dihydroxy-substituted aromatic hydrocarbons when E is an alkylene or alkylidene group, said group may be part of one or more fused rings attached to one or more aromatic groups bearing one hydroxy substituent. Suitable dihydroxy-substituted aromatic hydrocarbons of this type include those containing indane structural units such as represented by the formula (XII), which compound is 3-(4-hydroxyphenyl)-1,1,3-trimethylindan-5-ol, and by the formula (XIII), which compound is 1-(4-hydroxyphenyl)-1,3,3-trimethylindan-5-ol:

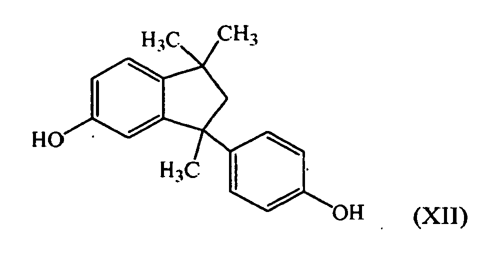

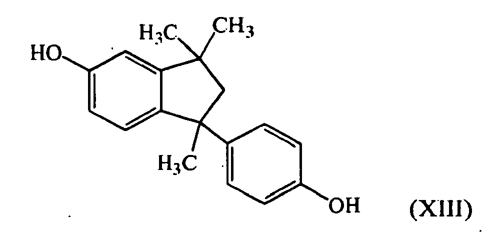

Also included among suitable dihydroxy-substituted aromatic hydrocarbons of the type comprising one or more alkylene or alkylidene groups as part of fused rings are the 2,2,2',2'-tetrahydro-1,1'-spirobi[1H-indene]diols having formula (XIV) : 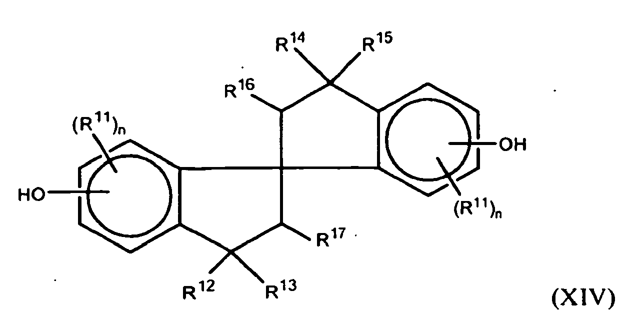 wherein each R¹¹ is independently selected from monovalent hydrocarbon radicals and halogen radicals; each R¹², R¹³, R¹⁴, and R¹⁵ is independently C1-6 alkyl; each R¹⁶ and R¹⁷ is independently H or C1-6 alkyl; and each n is independently selected from positive integers having a value of from 0 to 3 inclusive. In a particular embodiment the 2,2,2',2'-tetrahydro-1,1'-spirobi[1H-indene]diol is 2,2,2',2'-tetrahydro-3,3,3',3'-tetramethyl-1,1-spirobi[1H-indene]-6,6'-diol (sometimes known as "SBI"). Mixtures of alkali metal salts derived from mixtures of any of the foregoing dihydroxy-substituted aromatic hydrocarbons may also be employed.

Mixtures comprising two or more hydroxy-substituted hydrocarbons may also be employed. In some particular embodiments mixtures of at least two monohydroxy-substituted alkyl hydrocarbons, or mixtures of at least one monohydroxy-substituted alkyl hydrocarbon and at least one dihydroxy-substituted alkyl hydrocarbon, or mixtures of at least two dihydroxy-substituted alkyl hydrocarbons, or mixtures of at least two monohydroxy-substituted aromatic hydrocarbons, or mixtures of at least two dihydroxy-substituted aromatic hydrocarbons, or mixtures of at least one monohydroxy-substituted aromatic hydrocarbon and at least one dihydroxy-substituted aromatic hydrocarbon, or mixtures of at least one monohydroxy-substituted alkyl hydrocarbon and at least one dihydroxy-substituted aromatic hydrocarbon may be employed. In one embodiment, the polycarbonate resin is a blend of two or more polycarbonate resins.

The copolycarbonate may be prepared in the melt, in solution, or by interfacial polymerization techniques well known in the art. For example, the aromatic polycarbonates can be made by reacting bisphenol-A with phosgene, dibutyl carbonate or diphenyl carbonate. Such aromatic polycarbonates are also commercially available. In one embodiment, the aromatic polycarbonate resins are commercially available from General Electric Company, e.g., LEXAN™ bisphenol A-type polycarbonate resins.

The preferred polycarbonates are preferably high molecular weight aromatic carbonate polymers have an intrinsic viscosity (as measured in methylene chloride at 25°C) ranging from about 0.30 to about 1.00 deciliters per gram. Polycarbonates may be branched or unbranched and generally will have a weight average molecular weight of from about 10,000 to about 200,000, preferably from about 20,000 to about 100,000 as measured by gel permeation chromatography. It is contemplated that the polycarbonate may have various known end groups.

In one embodiment, the polycarbonate is present in an amount from about 0 to about 70 weight percent based on the total weight of the blend.

In one embodiment, the thermoplastic resin C, a poly(arylatecarbonate). In another embodiment the thermoplastic resin C, is a poly(estercarbonate). The poly(estercarbonate)can also be known as polyester-polycarbonate, copolyester-polycarbonate, and copolyestercarbonate. Such copolymers further contain, in addition to recurring carbonate chain units of the formula (XV), 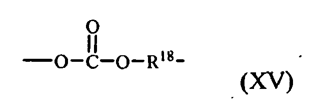 in which at least 60 percent of the total number of R¹⁸ groups are aromatic organic radicals and the balance thereof are aliphatic, alicyclic, or aromatic radicals. In one embodiment, each R¹ is an aromatic organic radical; repeating units of formula (XVI): 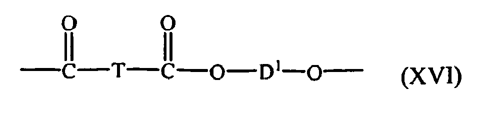 wherein D¹ is a divalent radical derived from a dihydroxy compound, and may be, for example, a C₂₋₁₀ alkylene radical, a C₆₋₃₀ alicyclic radical, a C₆₋₃₀ aromatic radical or polyoxyalkylene radical in which the alkylene groups contains 2 to 6 carbon atoms, specifically 2, 3 or 4 carbon atoms; and T divalent radical derived from a dicarboxylic acid, and may be, for example, a C₂₋₁₀ alkylene radical, a C₆₋₃₀ alicyclic radical, a C₆₋₃₀ alkyl aromatic radical, or a C₆₋₃₀ aromatic radical. In another embodiment, each R¹⁸ in formula XVI, is a radical of the formulat (XVII):

-A²-Y²-A³- (XVII)

wherein each of A² and A³ is a monocyclic divalent aryl radical and Y² is a bridging radical having one or two atoms that separate A² from A³. In an exemplary embodiment, one atom separates A² from A³. Illustrative non-limiting examples of radicals of this type are -O-, -S-, -S(O)-, -(SO₂)-, -C(O)-, methylene, cyclohexylmethylene, 2[2.2.1]-bicycloheptylidene, ethylidene, isopropylidene, neopentylidene, cyclohexlidene, cyclopentadecylidene, cyclododecylidene, and adamantylidene. The bridging radical Y¹ may be a hydrocarbon group or a saturated hydrocarbon group such as methylene, cyclohexylidene, or isopropylidene. In another embdodiment, Y² is a carbon-carbon bond (-) connecting A² and A³.

In one embodiment, D¹ is a C₂₋₆ alkylene radical. In another embodiment, D¹ is derived from an aromatic dihydroxy compound of formula (XVIII). 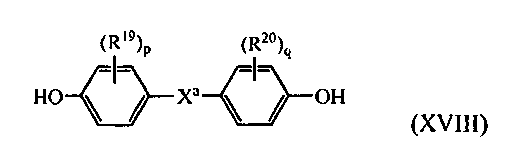 wherein R¹⁹ and R²⁰ each represent a halogen atom or a monovalent hydrocarbon group and may be the same or different; p and q are each independently integers of 0 to 4; and X^{a} represents one of the groups of formula (XIX): 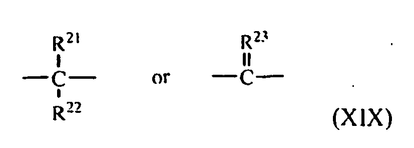 wherein R²¹ and R²² each independently represent a hydrogen atom or a monovalent linear alkyl or cyclic alkylene group and R²³ is a divalent hydrocarbon group. In an embodiment, R²¹ and R²² represent a cyclic alkylene group; or heteroatom-containing cyclic alkylene group comprising carbon atoms, heteroatoms with a valency of two or greater, or a combination comprising at least one heteroatom and at least two carbon atoms. Suitable heteroatoms for use in the heteroatom-containing cyclic alkylene group include -O-, -S-, and -N(Z)-, where Z is a substituent group selected from hydrogen, hydroxy, C₁₋₁₂ alkyl, C₁₋₁₂ alkoxy, or C₁₋₁₂ acyl. Where present, the cyclic alkylene group or heteroatom-containing cyclic alkylene group may have 3 to 20 atoms, and may be a single saturated or unsaturated ring, or fused polycyclic ring system wherein the fused rings are saturated, unsaturated, or aromatic.

In another embodiment, D¹ is derived from an aromatic dihydroxy compound of formula (XX) 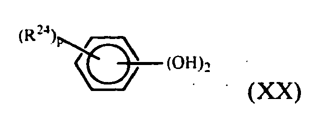 R²⁴ is independently a halogen atom, a C₁₋₁₂ hydrocarbon group, or a C₁₋₁₂ halogen substituted hydrocarbon group, and p is 0 to 4. The halogen is usually bromine. Examples of compounds that may be represented by the formula (XX) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of isophthalic acid to terephthalic acid is 91:1 to 2:98. In another specific embodiment, D is a C₂₋₆ alkylene radical and T is p-phenylene, m-phenylene, naphthalene, a divalent cycloaliphatic radical, or a mixture thereof.

In an embodiment, the polyarylates comprise resorcinol arylate polyesters as illustrated in formula (XXI): 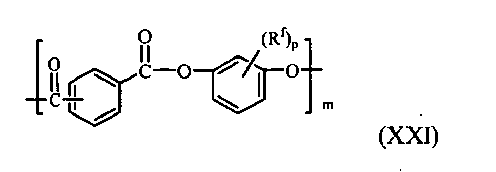 wherein R²⁴ and p are previously defined for formula (XX), and m is greater than or equal to 1. Where p is 0, R²⁴ is hydrogen. In an embodiment, m is 2 to 500. In another embodiment, the molar ratio of isophthalate to terephthalate can be about 0.25:1 to about 4.0:1.

In an embodiment, useful aromatic polyester blocks may include, for example, poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination comprising at least one of these. Also contemplated are aromatic polyesters with a minor amount, e.g., from about 0.5 to about 10 percent by weight, of units derived from an aliphatic diacid and/or an aliphatic polyol to make co-polyesters.

In addition to the ester units, the polyester-polycarbonates comprise carbonate units as described above. In an embodiment, carbonate units may be derived from aromatic dihydroxy compounds or a combination comprising at least one of the foregoing dihydroxy compounds. In an embodiment, specific carbonate units are derived from bisphenol A carbonate and/or resorcinol carbonate units.

Thus, in an embodiment, the polyester-polycarbonates have the structure shown in formula (XXII): 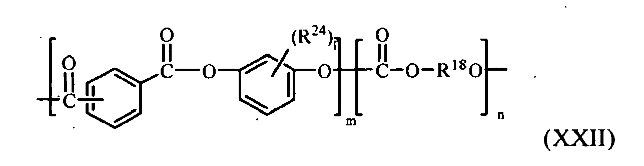 wherein R²⁴ , p, and m are as defined in formula (XXII), each R¹⁸ is independently a C₆₋₃₀ arylene group, and n is greater than or equal to one. In an embodiment, m is 2 to 500, and n is 2 to 500. In a specific embodiment, m is 3 to 300, and n is 3 to 300.

Specifically, the polyester unit of a polyester-polycarbonate can be derived from the reaction of a combination of isophthalic and terephthalic diacids (or derivatives thereof) with resorcinol, bisphenol A, or a combination comprising at least one of these, wherein the molar ratio of isophthalate units to terephthalate units is 91:9 to 2:98, specifically 85:15 to 3:97, more specifically 80:20 to 5:95, and still more specifically 70:30 to 10:90. The polycarbonate units can be derived from resorcinol and/or bisphenol A, in a molar ratio of resorcinol carbonate units to bisphenol A carbonate units of 0:100 to 99:1. In an embodiment, the polyester-polycarbonate polymer comprises isophthalate-terephthalate-resorcinol (ITR) ester units. As used herein, isophthalate-terephthalate-resorcinol ester units comprise a combination isophthalate esters, terephthalate esters, and resorcinol esters. In a specific embodiment, isophthalate-terephthalate-resorcinol ester units comprise a combination of isophthalate-resorcinol ester units and terephthalate-resorcinol ester units. The ratio of ITR ester units to the carbonate units in the polyester-polycarbonate is 1:99 to 99:1, specifically 5:95 to 95:5, more specifically 10:90 to 90:10, still more specifically 20:80 to 80:20. In a specific embodiment, the polyester-polycarbonate is a poly(isophthalate-terephthalate-resorcinol ester)-co-(bisphenol-A carbonate) polymer.

While it is contemplated that other resins may be used in the thermoplastic compositions described herein, the polyester-polycarbonate polymers having ITR ester units and carbonate units are particularly suited for use in thermoplastic compositions herein. Thus, in another embodiment, copolymers of polyester-polycarbonate consist of isophthalate-terephthalate-resorcinol ester units and carbonate units.

The polyester-polycarbonates may have a weight-averaged molecular weight (Mw) of 1,500 to 100,000, specifically 1,700 to 50,000, and more specifically 2,000 to 40,000. Molecular weight determinations are performed using gel permeation chromatography (GPC), using a crosslinked styrene-divinylbenzene column and calibrated to BPA-polycarbonate references. Samples are prepared at a concentration of about 1 mg/ml, and are eluted at a flow rate of about 1.0 ml/min.

In one embodiment, the composition of the present further include additives which do not interfere with the previously mentioned desirable properties but enhance other favorable properties such as anti-oxidants, flame retardants, flow modifiers, impact modifiers, colorants, mold release agents, quenchers, UV light stabilizers, heat stabilizers, reinforcing materials, colorants, nucleating agents, lubricants, antidrip agents and combinations thereof. Additionally, additives such as antioxidants, minerals such as talc, clay, mica, and other stabilizers including but not limited to UV stabilizers, such as benzotriazole, supplemental reinforcing fillers such as flaked or milled glass, and the like, flame retardants, pigments or combinations thereof may be added to the compositions of the present invention. The additive is present ranging from about 0 to 40 weight percent, based on the total weight of the thermoplastic resin.

In yet another embodiment of the present invention the composition further comprises a filler. The fillers may be of natural or synthetic, mineral or non-mineral origin, provided that the fillers have sufficient thermal resistance to maintain their solid physical structure at least at the processing temperature of the composition with which it is combined. Suitable fillers include clays, nanoclays, carbon black, wood flour either with or without oil, various forms of silica (precipitated or hydrated, fumed or pyrogenic, vitreous, fused or colloidal, including common sand), glass, metals, inorganic oxides (such as oxides of the metals in Periods 2, 3, 4, 5 and 6 of Groups Ib, IIb, IIIa, IIIb, IVa, IVb (except carbon), Va, VIa, VIIa and VIII of the Periodic Table), oxides of metals (such as aluminum oxide, titanium oxide, zirconium oxide, titanium dioxide, nanoscale titanium oxide, aluminum trihydrate, vanadium oxide, and magnesium oxide), hydroxides of aluminum or ammonium or magnesium, carbonates of alkali and alkaline earth metals (such as calcium carbonate, barium carbonate, and magnesium carbonate), antimony trioxide, calcium silicate, diatomaceous earth, fuller earth, kieselguhr, mica, talc, slate flour, volcanic ash, cotton flock, asbestos, kaolin, alkali and alkaline earth metal sulfates (such as sulfates of barium and calcium sulfate), titanium, zeolites, wollastonite, titanium boride, zinc borate, tungsten carbide, ferrites, molybdenum disulfide, asbestos, cristobalite, aluminosilicates including Vermiculite, Bentonite, montmorillonite, Na-montmorillonite, Ca-montmorillonite, hydrated sodium calcium aluminum magnesium silicate hydroxide, pyrophyllite, magnesium aluminum silicates, lithium aluminum silicates, zirconium silicates, and combinations comprising at least one of the foregoing fillers. Suitable fibrous fillers include glass fibers, basalt fibers, aramid fibers, carbon fibers, carbon nanofibers, carbon nanotubes, carbon buckyballs, ultra high molecular weight polyethylene fibers, melamine fibers, polyamide fibers, cellulose fiber, metal fibers, potassium titanate whiskers, and aluminum borate whiskers.

Alternatively, or in addition to a particulate filler, the filler may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable co-woven structures include, for example, glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

Optionally, the fillers may be surface modified, for example treated so as to improve the compatibility of the filler and the polymeric portions of the compositions, which facilitates deagglomeration and the uniform distribution of fillers into the polymers. One suitable surface modification is the durable attachment of a coupling agent that subsequently bonds to the polymers. Use of suitable coupling agents may also improve impact, tensile, flexural, and/or dielectric properties in plastics and elastomers; film integrity, substrate adhesion, weathering and service life in coatings; and application and tooling properties, substrate adhesion, cohesive strength, and service life in adhesives and sealants. Suitable coupling agents include silanes, titanates, zirconates, zircoaluminates, carboxylated polyolefins, chromates, chlorinated paraffins, organosilicon compounds, and reactive cellulosics. The fillers may also be partially or entirely coated with a layer of metallic material to facilitate conductivity, e.g., gold, copper, silver, and the like.

In one embodiment, the reinforcing filler comprises glass fibers. For compositions ultimately employed for electrical uses, it is preferred to use fibrous glass fibers comprising lime-aluminum borosilicate glass that is relatively soda free, commonly known as "E" glass. However, other glasses are useful where electrical properties are not so important, e.g., the low soda glass commonly known as "C" glass. The glass fibers may be made by standard processes, such as by steam or air blowing, flame blowing and mechanical pulling. Preferred glass fibers for plastic reinforcement may be made by mechanical pulling. The diameter of the glass fibers is generally about I to about 50 micrometers, preferably about 1 to about 20 micrometers. Smaller diameter fibers are generally more expensive, and glass fibers having diameters of about 10 to about 20 micrometers presently offer a desirable balance of cost and performance. The glass fibers may be bundled into fibers and the fibers bundled in turn to yarns, ropes or rovings, or woven into mats, and the like, as is required by the particular end use of the composition. In preparing the molding compositions, it is convenient to use the filamentous glass in the form of chopped strands of about one-eighth to about 2 inches long, which usually results in filament lengths between about 0.0005 to about 0. 25 inch in the molded compounds. Such glass fibers are normally supplied by the manufacturers with a surface treatment compatible with the polymer component of the composition, such as a siloxane, titanate, or polyurethane sizing, or the like.

When present in the composition, the filler may be used from about 0 to about 80 weight percent, based on the total weight of the composition. Within this range, it is preferred to use at least about 20 weight percent of the reinforcing filler. Also within this range, it is preferred to use up to about 70 weight percent, more preferably up to about 60 weight percent, of the reinforcing filler.

Flame-retardant additives are desirably present in an amount at least sufficient to reduce the flammability of the polyester resin, preferably to a UL94 V-0 rating. The amount will vary with the nature of the resin and with the efficiency of the additive. In general, however, the amount of additive will be from 1 to 30 percent by weight based on the weight of resin. A preferred range will be from about 5 to 20 percent.

Typically halogenated aromatic flame-retardants include tetrabromobisphenol A polycarbonate oligomer, polybromophenyl ether, brominated polystyrene, , brominated imides, brominated polycarbonate, poly (haloaryl acrylate), poly (haloaryl methacrylate), or mixtures thereof. Examples of other suitable flame retardants are brominated polystyrenes such as polydibromostyrene and polytribromostyrene, decabromobiphenyl ethane, tetrabromobiphenyl, brominated alpha, omega -alkylene-bis-phthalimides, e.g. N,N'-ethylene-bis-tetrabromophthalimide, oligomeric brominated carbonates, especially carbonates derived from tetrabromobisphenol A, which, if desired, are end-capped with phenoxy radicals, or with brominated phenoxy radicals, or brominated epoxy resins.

The flame retardants are typically used with a synergist, particularly inorganic antimony compounds. Such compounds are widely available or can be made in known ways. Typical, inorganic synergist compounds include Sb₂O₅, SbS₃. sodium antimonate and the like. Especially preferred is antimony trioxide (Sb₂O₃). Synergists such as antimony oxides, are typically used at about 0.1 to 10 by weight based on the weight percent of resin in the final composition. Also, the final composition may contain polytetrafluoroethylene (PTFE) type resins or copolymers used to reduce dripping in flame retardant thermoplastics. Also other halogen-free flame retardants than the mentioned P or N containing compounds can be used, non limiting examples being compounds as Zn-borates, hydroxides or carbonates as Mg- and/or Al-hydroxides or carbonates, Si-based compounds like silanes or siloxanes, Sulfur based compounds as aryl sulphonates (including salts of it) or sulphoxides, Sn-compounds as stannates can be used as well often in combination with one or more of the other possible flame retardants.

Other additional ingredients may include antioxidants, and UV absorbers, and other stabilizers. Antioxidants include i) alkylated monophenols, for example: 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(alpha-methylcyclohexyl)-4,6 dimethylphenol, 2,6-di-octadecyl-4-methylphenol, 2,4,6,-tricyclohexyphenol, 2,6-di-tert-butyl-4-methoxymethylphenol; ii) alkylated hydroquinones, for example, 2,6-di-tert-butyl-4-methoxyphenol, 2,5-di-tert-butyl-hydroquinone, 2,5-di-tert-amyl-hydroquinone, 2,6-diphenyl-4octadecyloxyphenol; iii) hydroxylated thiodiphenyl ethers; iv) alkylidene-bisphenols; v) benzyl compounds, for example, 1,3,5-tris-(3,5-di-tert-butyl-4-hydroxybenzyl)-2,4,6-trimethylbenzene; vi) acylaminophenols, for example, 4-hydroxy-lauric acid anilide; vii) esters of beta-(3,5-di-tert-butyl-4-hydroxyphenol)-propionic acid with monohydric or polyhydric alcohols; viii) esters of beta-(5-tert-butyl-4-hydroxy-3-methylphenyl)-propionic acid with monohydric or polyhydric alcohols; vii) esters of beta-(5-tert-butyl-4-hydroxy-3-methylphenyl) propionic acid with mono-or polyhydric alcohols, e.g., with methanol, diethylene glycol, octadecanol, triethylene glycol, 1,6-hexanediol, pentaerythritol, neopentyl glycol, tris(hydroxyethyl) isocyanurate, thiodiethylene glycol, N,N-bis(hydroxyethyl) oxalic acid diamide. Typical, UV absorbers and light stabilizers include i) 2-(2'-hydroxyphenyl)-benzotriazoles, for example, the 5'methyl-,3'5'-di-tert-butyl-,5'-tert-butyl-,5'(1,1,3,3-tetramethylbutyl)-,5-chloro-3',5'-di-tert-butyl-,5-chloro-3'tert-butyl-5'methyl-,3'sec-butyl-5'tert-butyl-,4'-octoxy,3',5'-ditert-amyl-3',5'-bis-(alpha, alpha-dimethylbenzyl)-derivatives; ii) 2.2 2-Hydroxy-benzophenones, for example, the 4-hydroxy-4-methoxy-,4-octoxy,4-decloxy-,4-dodecyloxy-,4-benzyloxy,4,2',4'-trihydroxy-and 2'hydroxy-4,4'-dimethoxy derivative, and iii) esters of substituted and unsubstituted benzoic acids for example, phenyl salicylate, 4-tert-butylphenyl-salicilate, octylphenyl salicylate, dibenzoylresorcinol, bis-(4-tert-butylbenzoyl)-resorcinol, benzoylresorcinol, 2,4-di-tert-butyl-phenyl-3,5-di-tert-butyl-4-hydroxybenzoate and hexadecyl-3,5-di-tert-butyl-4-hydroxybenzoate.

The composition can further comprise one or more anti- dripping agents, which prevent or retard the resin from dripping while the resin is subjected to burning conditions. Specific examples of such agents include silicone oils, silica (which also serves as a reinforcing filler), asbestos, and fibrillating-type fluorine-containing polymers. Examples of fluorine-containing polymers include fluorinated polyolefins such as, for example, poly(tetrafluoroethylene), tetrafluoroethylene/hexafluoropropylene copolymers, tetrafluoroethylene/ethylene copolymers, polyvinylidene fluoride, poly(chlorotrifluoroethylene), and the like, and mixtures comprising at least one of the foregoing anti-dripping agents. A preferred anti- dripping agent is poly(tetrafluroethylene). When used, an anti-dripping agent is present in an amount of about 0.02 to about 2 weight percent, and more preferably from about 0.05 to about I weight percent, based on the total weight of the composition.

Dyes or pigments may be used to give a background coloration. Dyes are typically organic materials that are soluble in the resin matrix while pigments may be organic complexes or even inorganic compounds or complexes, which are typically insoluble in the resin matrix. These organic dyes and pigments include the following classes and examples: furnace carbon black, titanium oxide, zinc sulfide, phthalocyanine blues or greens, anthraquinone dyes, scarlet 3b Lake, azo compounds and acid azo pigments, quinacridones, chromophthalocyanine pyrrols, halogenated phthalocyanines, quinolines, heterocyclic dyes, perinone dyes, anthracenedione dyes, thioxanthene dyes, parazolone dyes, polymethine pigments and others.

In another embodiment, the quenchers are phosphorus containing derivatives, examples include but are not limited to diphosphites, phosphonates, metaphosphoric acid; arylphosphinic and arylphosphonic acids; polyols; carboxylic acid derivatives and combinations thereof. The amount of the quencher added to the thermoplastic composition is an amount that is effective to stabilize the thermoplastic composition. In one embodiment, the amount is at least about 0.001 weight percent, preferably at least about 0.01 weight percent, based on the total amount of the thermoplastic resin composition. The amount of quencher used is not more than the amount effective to stabilize the composition in order not to deleteriously affect the advantageous properties of said composition. In one embodiment, the amount can range from 0.001 or 0.01 weight percent, based on the total amount of the thermoplastic resin composition.

In one embodiment of the present invention, the polyester resin composition has a molecular weight in the range from about 5000 to about 30000 as measured by gel permeation chromatography using polystyrene standards. In another embodiment the polyester resin has a molecular weight greater than about 20000.

In one embodiment, the blend composition may be made by conventional blending techniques. The production of the compositions may utilize any of the blending operations known for the blending of thermoplastics, for example blending in a kneading machine such as a Haake mixture, a Banbury mixer or an extruder. To prepare the composition, the components may be mixed by any known methods. Typically, there are two distinct mixing steps: a premixing step and a melt-mixing step. In the premixing step, the dry ingredients are mixed together. The premixing step is typically performed using a tumbler mixer or ribbon blender. However, if desired, the premix may be manufactured using a high shear mixer such as a Henschel mixer or similar high intensity device. The premixing step is typically followed by a melt mixing step in which the premix is melted and mixed again as a melt. Alternatively, the premixing step may be omitted, and raw materials may be added directly into the feed section of a melt mixing device, preferably via multiple feeding systems. In the melt mixing step, the ingredients are typically melt kneaded in a single screw or twin screw extruder, a Banbury mixer, a two roll mill, or similar device.

In one embodiment, the ingredients are pre-compounded, pelletized, and then molded. Pre-compounding can be carried out in conventional equipment. For example, after pre-drying the polyester composition (e.g., for about four hours at about 120° C.), a single screw extruder may be fed with a dry blend of the ingredients; the screw employed having a long transition section to ensure proper melting. Alternatively, a twin-screw extruder with intermeshing co-rotating screws can be fed with resin and additives at the feed port and reinforcing additives (and other additives) may be fed downstream. The pre-compounded composition can be extruded and cut up into molding compounds such as conventional granules, pellets, and the like by standard techniques. The composition can then be molded in any equipment conventionally used for thermoplastic compositions, such as a Newbury type injection molding machine with conventional cylinder temperatures, at about 230° C. to about 280° C., and conventional mold temperatures at about 55° C. to about 95° C.

In one embodiment of the present invention, the polyesters are prepared by melt process. The process may be a continuous polymerization process wherein the said reaction is conducted in a continuous mode in a train of reactors of atleast two in series or parallel. In an alternate embodiment the process may be a batch polymerization process wherein the reaction is conducted in a batch mode in a single vessel or in multiple vessels and the reaction can be conducted in two or more stages depending on the number of reactors and the process conditions. In an alternate embodiment, the process can be carried out in a semi-continuous polymerization process where the reaction is carried out in a batch mode and the additives are added continuously. Alternatively, the reaction is conducted in a continuous mode where the polymer formed is removed continuously and the reactants or additives are added in a batch process. In an alternate embodiment the product from at least one of the reactors can be recycled back into the same reactor intermittently by "pump around" to improve the mass transfer and kinetics of reaction. Alternatively the reactants and the additives are stirred in the reactors with a speed of about 25 revolutions per minute (here in after "rpm") to about 2500 rpm. The composition of the invention may also be made by conventional composite making processes like pultrusion, vacuum bagging, compression molding etc.

In one embodiment of the present invention, the process may be carried out in air or in an inert atmosphere. The inert atmosphere may be either nitrogen or argon or carbon dioxide. The heating of the various ingredients may be carried out in a temperature between about 150 °C and about 300 °C and at a pressure of about 0.01 to 1 atmosphere. In one embodiment, the ingredients are heated to a temperature between 225° C and about 250° C and at a pressure of about 0.01 to 1 atmosphere to form the first mixture. In one embodiment, the polyester is recovered by isolating the polymer followed by grinding or by extruding the hot polymer melt, cooling and pelletizing.

In one embodiment of the present invention, a catalyst may be employed. The catalyst may be an acidic, or basic or a transition metal based catalyst. The catalyst can be any of the catalysts commonly used in the prior art such as alkaline earth metal oxides such as magnesium oxides, calcium oxide, barium oxide and zinc oxide; alkali and alkaline earth metal salts; a Lewis catalyst such as tin or titanium compounds; a nitrogen-containing compound such as tetra-alkyl ammonium hydroxides used like the phosphonium analogues, e.g., tetra-alkyl phosphonium hydroxides or acetates. The Lewis acid catalysts and the aforementioned metal oxide or salts can be used simultaneously. In one embodiment, the catalyst is not a tertiary amine or an alkali metal hydroxide.

The reaction may be conducted optionally in presence of a solvent or in neat conditions without the solvent. The organic solvent used in the above process according to the invention should be capable of dissolving the polyester to an extent of at least 0.01 g/per ml at 25°C and should have a boiling point in the range of 140 - 290°C at atmospheric pressure. Preferred examples of the solvent include but are not limited to amide solvents, in particular, N-methyl-2-pyrrolidone; N- acetyl-2-pyrrolidone; N,N'-dimethyl formamide; N,N'-dimethyl acetamide; N, N'-diethyl acetamide; N,N'-dimethyl propionic acid amide; N,N'-diethyl propionic acid amide; tetramethyl urea; tetraethyl urea; hexamethylphosphor triamide; N-methyl caprolactam and the like. Other solvents may also be employed, for example, methylene chloride, chloroform, 1,2-dichloroethane, tetrahydrofuran, diethyl ether, dioxane, benzene, toluene, chlorobenzene, o-dichlorobenzene and the like.

The molten mixture of the polyester may be obtained in particulate form, example by pelletizing or grinding the composition. The composition of the present invention can be molded into useful articles by a variety of means by many different processes to provide useful molded products such as injection, extrusion, profile extrusion, film or sheet, pultrusion, rotation, foam molding calender molding, blow molding, thermoforming, compaction, melt spinning, fiber spinning to form articles. Non-limiting examples of the various articles that could be made from the thermoplastic composition of the present invention include electrical connectors, electrical devices, computers, building and construction, outdoor equipment. The articles made from the composition of the present invention may be used widely in house ware objects such as food containers and bowls, home appliances, as well as films, electrical connectors, electrical devices, computers, building and construction, outdoor equipment, trucks and automobiles. In one embodiment, the polyester may be blended with other conventional polymers.

Compositions of the present invention and articles derived from the composition can have useful properties. In an advantageous feature, polyester compositions of the present invention and articles derived from the composition have a glass transition temperature of at least 60 °C. In another embodiment the polyester compositions have a glass transition of at least 70 °C. In another embodiment the polyester composition may be transparent or translucent or opaque. The term "transparent" as used herein would refer to a composition that transmits at least 70 % in the region ranging from 250 nm to 700 nm with a haze of less than 10 %. The term "translucent" as used herein would refer to a composition that transmits at least 60 % in the region ranging from 250 nm to 700 nm with a haze of less than 40 %. The high glass transition temperature and good optical properties can be obtained without significant degradation of the other properties such as tensile properties. In one embodiment, the compositions and articles derived from the polyester compositions have good heat, mechanical properties and good optical properties. In one embodiment, the composition has a transmission of at least 65 %. In another embodiment, the composition has a transmission of at least 75 %. In yet another embodiment, the composition has a haze of less than 40%, and in another embodiment, the composition has a haze of less than 10%.

Accordingly, the invention provides previously unavailable advantages of a balance combination of optical properties and heat for polyester compositions by employing a process of using appropriate copolycarbonates derived from a 2-hydrocarbyl-3,3-bis(hydroxyaryl)phthalimidine and a second aromatic dihydroxy compounds. In one embodiment, the balance of the optical and heat properties are obtained without the consequent loss or degradation of other desirable characteristics. Typically, it is difficult to obtain high heat, good optical, and good mechanicals in a particular polymer composition. In one embodiment, these improved optical and heat is obtained together with mechanical properties render the compositions suitable for injection molding.

### EXAMPLES

### MATERIALS

Table 1 provides the details of the materials and the source from where they were procured.

**Table 1:**

| Component | Description | Source |
|---|---|---|
| PC | Polycarbonate resin (Mw = 30.000 g/mol, PC standards) | GE Plastics |
| ITR20 | Poly(20 wt% isophthalate-terephthalate-resorcinol ester)-co- (80 wt% bisphenol-A carbonate) copolymer (Mw = 30,000 g/mol, PC standards) | GE Plastics |
| ITR90 | Poly(90 w% isophthalate-terephthalate-resorcinol)-co-(10 wt% bisphenol-A carbonate) copolymer (Mw = 25,000 g/mol, PC standards) | GE Plastics |
| 36PPP | Poly(36 weight% 3,3-Bis-(4-hydroxyphenyl)-2-phenyl-2,3-dihydroisoindol-1-one)-co-(64 weight% bisphenol-A carbonate) copolymer (Mw = 30,000 g/mol. PC standards) | GE Plastics |
| 48PPP | Poly(48 weight% 3,3-Bis-(4-hydroxyphenyl)-2-phenyl-2.3-dihydroisoindol-1-one)-co-(52 weight% bisphenol-A carbonate) copolymer (Mw = 30,000 g/mol, PC standards) | GE Plastics |
| 55PPP | Poly(55 weight% 3,3-Bis-(4-hydroxyphenyl)-2-phenyl-2,3-dihydroisoindol-1-one)-co-(45 weight% bisphenol-A carbonate) copolymer (Mw = 30,000 g/mol, PC standards) | GE Plastics |
| PCCD | Polycycloheylidene cyclohexanedicarboxylate - Mw 80,000) | Eastman Chemical |
| PETG | Poly(70 mol% ethylene terephihalate)-co-(30 mol% 1,4-cyclohexanedimethylene terephthalate) (Mw = 70,000 g/mol, PS standards) | Eastman Chemical |
| PCTG | Poly(20 mol% ethylene terephthalate)-co-(80 mol% 1,4-cyclohexanedimethylene terephthalate) (Mw = 70,000 g/mol. PS standards) | Eastman Chemical |
| PCT | Poly(1,4-cyclohexanedimethylene terephthalate) (Mw= 70.000 a/mol, PS standards) | Eastman Chemical |
| t-EXL | polyoreanosiloxane/polycarbonate block copolymer | GE Plastics |
| APEC 9353 | High heat Polycarbonate copolymer | Bayer |
| Ecdel 9966 | Polyester elastomer | Eastman Chemicals |

### PROCEDURE / TECHNIQUES

### GENERAL PROCEDURE

The ingredients of the examples shown below in Tables 2 to 23, were extruded on a 25 mm Werner Pfleiderer Twin Screw Extruder with a vacuum vented mixing screw, at a barrel and die head temperature between 240 and 265 °C and 150 to 300 rpm screw speed. The extruder has 8 independent feeders for different raws and can be operated at a maximum rate of 300 lbs/hr. The extrudate was cooled through a water bath prior to pelletizing. Test parts were injection molded on a van Dorn molding machine with a set temperature of approximately 240 to 265 °C. The pellets were dried for 3-4 hours at 120 °C in a forced air-circulating oven prior to injection molding.

### RESULTS AND DISCUSSION

### EXAMPLES 1-3

In the Examples Ex.1 to Ex.3 the polyester employed was polycyclohexylidene cyclohexanedicarboxylate also known as PCCD. The type of copolycarbonate employed was varied. In the case of Ex.1 the copolycarbonate employed comprises poly (36 weight% 3,3-Bis-(4-hydroxyphenyl)-2-phenyl-2,3-dihydroisoindol-1-one)-co-(64 weight% bisphenol-A carbonate) copolymer. However, in Ex.2 and Ex.3 the copolycarbonate was poly(48 weight% 3,3-Bis-(4-hydroxyphenyl)-2-phenyl-2,3-dihydroisoindol-1-one)-co-(52 weight% bisphenol-A carbonate) copolymer and poly(52 weight% 3,3-Bis-(4-hydroxyphenyl)-2-phenyl-2,3-dihydroisoindol-1-one)-co-(48 weight% bisphenol-A carbonate) copolymer respectively. The synthetic procedure followed to prepare the blend was identical to the general procedure described above. However, the amount of polyester was 25 weight percent and the copolycarbonate was 75 weight percent in the blends of Ex.1 to Ex.3.

### COMPARATIVE EXAMPLE 1, 2 and 3

The Comparative Examples I and 2 (CEx.1 and CEx.2) were synthesized using the general procedure however in this case no copolycarbonate comprising PPP was added. The CEx.1 comprised of Polycarbonate (75 weight percent) and polyester which is PCCD (25 weight percent) while CEx.2 comprised of Polycarbonate (40 weight percent) and polyester which is PCCD (60 weight percent). Comparative example 3 (CEx.3) was made using the general procedure by blending PCCD (60 weight percent) with 55PPP (40 weight percent).

**Table 2**

| | CEx.1 | Ex.1 | Ex.2 | Ex.3 | CEx.2 | CEx.3 |
|---|---|---|---|---|---|---|
| PC | 75 | 0 | 0 | 0 | 40 | 0 |
| 36PPP | 0 | 75 | 0 | 0 | 0 | 0 |
| 48PPP | 0 | 0 | 75 | 0 | 0 | 0 |
| 52PPP | 0 | 0 | 0 | 75 | 0 | 0 |
| 55PPP | 0 | 0 | 0 | 0 | 0 | 40 |
| PCCD | 25 | 25 | 25 | 25 | 60 | 60 |
| Transmission (%) | 87 | 87 | 85 | 77 | 87 | < 50 |
| Haze (%) | 3 | 3 | 6 | 10 | 3 | > 50 |
| HDT (°C) | 105 | 116 | 126 | 131 | 79 | 74 |

From Table 2, it can be observed that heat properties of the blend increases without affecting the optical properties for example Ex.1 to Ex. 3 where the HDT is greater than 110 °C and transmission is greater than 80%. However, when the amount of PPP in the copolymer increases, the optical properties are affected as can be seen in CEx.3.

### EXAMPLES 4-6

In the Examples Ex.4 to Ex.6 the composition was made using the general process described above. The amount of the copolycarbonate was varied. The polyester employed was PCCD and the copolycarbonate used was 36PPP. The amount of 36PPP was 80 weight percent in Example 4, 20 weight percent in Example 5 and 53 weight percent in Example 6. The amount of PCCD in the composition of Examples 4-6 was 20 weight percent, 80 weight percent and 47 weight percent respectively.

### COMPARATIVE EXAMPLES 4-6

The Comparative Examples 4-6 (CEx.4-6) were synthesized using the general procedure. While Comparative Example 4 comprised 48PPP (20 weight percent) and about 80 weight percent of PCCD, Comparative Examples 5 and 6 were made of 52PPP (48 weight percent) and about 52 weight percent of PCCD and 52PPP (20 weight percent) and about 80 weight percent of PCCD.

**Table 3**

| | Ex.4 | Ex.5 | Ex.2 | Ex.6 | CEx.4 |
|---|---|---|---|---|---|
| 36PPP | 80 | 20 | 75 | 53 | |
| 48PPP | | | | | 20 |
| PCCD | 20 | 80 | 25 | 47 | 80 |
| Transmission (%) | 87 | 87 | 85 | 84 | 53 |
| Haze (%) | 3 | 4 | 6 | 3 | > 50 |
| HDT (0C) | 122 | 64 | 126 | 100 | 64 |
| Tensile Mod (MPa) | 2350 | 1290 | 2450 | 2030 | 1360 |
| Elong. @ brk (%) | 60 | 200 | 40 | 111 | 200 |
| RT Dynatup total energy (J) | 65 | 60 | 69 | 70 | 63 |

Table 3 shows that blends of polyester with PPP-copolymers having 36 weight percent (Ex.4) and 48 weight percent (Ex. 2 and 6) of PPP in the copolymer respectively, have good heat properties while maintaining the optical and mechanical properties. However when the amount of PPP in the copolymer is at 48 weight percent and the polyester amount in the blend increases in the excess of 70%, the optical properties are affected as can be seen in CEx.4.

**Table 4**

| | Ex.3 | CEx.5 | CEx.6 |
|---|---|---|---|
| 52PPP | 75 | 48 | 20 |
| PCCD | 25 | 52 | 80 |
| Transmission (%) | 84 | < 50 | < 50 |
| Haze (%) | 3 | >50 | > 50 |
| HDT (0C) | 131 | 84 | 61 |
| Tensile Mod (MPa) | 2450 | 1940 | 1320 |
| Elong. @ brk (%) | 20 | 44 | 200 |
| RT Dynatup total energy (J) | 72 | 65 | 63 |

Table 4 shows that blends of PCCD with PPP-copolymers where the PPP levels in the copolymer are about 52weight percent have good heat, mechanical and optical properties as seen in Ex.3. However, as the amount of polyester increases in the blend the composition become less transparent (CEx. 5 and CEx. 6).

### EXAMPLE 7 and COMPARATIVE EXAMPLE 6

The Example 7 and Comparative Example 7 composition comprised in addition to 55PPP and PCCD, ITR20. The amount of the components in the composition was 55PPP (10 weight percent), PCCD (25 weight percent) and ITR20 (65 weight percent) in Example 7 and 55PPP (25 weight percent), PCCD (25 weight percent) and ITR20 (50 weight percent) in the case of Comparative Example 7. These compositions were synthesized using the general procedure given above.

**Table 5**

| | Ex.7 | CEx.7 |
|---|---|---|
| 55PPP | 10 | 25 |
| PCCD | 25 | 25 |
| ITR20 | 65 | 50 |
| Transmission (%) | 78 | < 50 |
| Haze (%) | 25 | > 50 |
| HDT | 100 | 106 |
| Tensile Mod (MPa) | 2180 | 2310 |
| Elong @ brk (%) | 120 | 120 |
| RT Dynatup total energy (J) | 71 | 75 |

Table 5 illustrates that blends of PCCD, PPP-copolymers (where the PPP level in the copolymer exceeds 55%) and polyester carbonate (ITR20) give translucent blends with good heat properties Ex.7. These translucent blends are obtained at certain levels of ITR20.

### EXAMPLE 8

The Example 8 was synthesized according to the method given in the general procedure. The composition of Example 8 comprised 75 weight percent of 36 PPP as the copolycarbonate and 25 weight percent of PCT as the polyester.

### COMPARATIVE EXAMPLE 8 (CEx.8)

The Comparative Example 8 (CEx.8) was synthesized using the general procedure however in this case no copolycarbonate comprising PPP was added. The CEx.8 comprised of Polycarbonate (75 weight percent) and polyester being PCT (25 weight percent).

**Table 6**

| | CEx.8 | Ex.8 |
|---|---|---|
| PC | 75 | 0 |
| 36PPP | 0 | 75 |
| PCT | 25 | 25 |
| Transmission (%) | 83 | 83 |
| Haze (%) | 4 | 5 |
| HDT | 111 | 124 |

From Table 6 it can be observed that better heat properties are obtained without compromising optical properties Ex.8 and CEx.7.

### COMPARATIVE EXAMPLES 9-11

The Comparative Examples 9-11 (CEx.9-11) were synthesized using the general procedure. While Comparative Example 9 comprised 48PPP (75 weight percent) and about 25 weight percent of PCT, Comparative Examples 10 were made of 59PPP (75 weight percent) and about 25 weight percent of PCT. The Comparative Example 11 was comprised 48PPP (53 weight percent) and about 47 weight percent of PCT.

**Table 7**

| | E.8 | (CEx.9) | (CEx.10) | (CEx.11) |
|---|---|---|---|---|
| 36PPP | 75 | | | |
| 48PPP | | 75 | | 53 |
| 59PPP | | | 75 | |
| PCT | 25 | 25 | 25 | 47 |
| Transmission (%) | 83 | < 50 | < 50 | < 50 |
| Haze (%) | 4 | >50 | > 50 | > 50 |
| HDT (°C) | 124 | 146 | 158 | 99 |
| Tensile Mod (MPa) | 2450 | 2230 | 2640 | 2550 |
| Elong. @ brk (%) | 120 | 120 | 20 | 40 |
| RT Dynatup total energy (J) | 68 | 25 | 54 | 68 |

From Table 7 it can be observed that an increase in PPP level in the copolymer can increase heat (Ex.8), however, a decrease in the optical properties is observed (CEx.9 and CEx.10)

### EXAMPLE 9 AND 10

The Examples 9 and 10 were synthesized according to the method given in the general procedure. The composition of Example 9 comprised 75 weight percent of 48 PPP as the copolycarbonate and 25 weight percent of PETG as the polyester. The composition of Example 10 comprised 53 weight percent of 48 PPP as the copolycarbonate and 47 weight percent of PETG as the polyester.

### COMPARATIVE EXAMPLES 12-14

The Comparative Examples 12-14 (CEx.12-14) were synthesized using the general procedure. While Comparative Example 12 comprised 55PPP (80 weight percent) and about 25 weight percent of PETG, Comparative Examples 13 was made of 36PPP (20 weight percent) and about 80 weight percent of PETG. The Comparative Example 14 comprised 48PPP (20 weight percent) and about 80 weight percent of PETG.

**Table 14**

| | Ex.9 | Ex.10 | CEx.12 | CEx.13 | CEx.14 |
|---|---|---|---|---|---|
| 36PPP | 80 | 0 | 0 | 20 | 0 |
| 48PPP | 0 | 80 | 0 | 0 | 20 |
| 55PPP | 0 | 0 | 80 | 0 | 0 |
| PETG | 20 | 20 | 20 | 80 | 80 |
| Transmission (%) | 70 | 82 | < 50 | < 50 | < 50 |
| Haze (%) | 40 | 7 | > 50 | > 50 | > 50 |
| HDT | 118 | 131 | 130 | 70 | 70 |

The Ex.9 and Ex.10 in Table 14 illustrate that transparent or translucent blend of PPP-copolymer with PETG. The PPP copolymer level & ratio of blend affect the optical properties of the compositions (CEx. 11-13).

### EXAMPLES 11-14

The Examples 11-14 were made using the method described in the general procedure above. The Examples 11-14 comprised of PPP copolycarbonate of varying PPP content with PETG as the polyester component and ITR20. The amount of the components in the composition was 36PPP (25 weight percent), PETG (25 weight percent) and ITR20 (50 weight percent) in Example 11, 48PPP (25 weight percent), PETG (25 weight percent) and ITR20 (50 weight percent) in Example 12, 52PPP (25 weight percent), PETG (25 weight percent) and ITR20 (50 weight percent) in Example 13 and 36PPP (13 weight percent), PETG (45 weight percent) and ITR20 (42 weight percent) in Example 14.

### COMPARATIVE EXAMPLES 15-20

The Comparative Examples 15-20 (CEx.15-20) were synthesized using the general procedure. The Examples 15-20 comprised of PPP copolycarbonate of varying PPP content with PETG as the polyester component and ITR20. While Comparative Example 15 comprised 36PPP (35 weight percent), PETG (35 weight percent) and ITR20 (30 weight percent); 48PPP (35 weight percent), PETG (35 weight percent) and ITR20 (30 weight percent) in Comparative Example 16; 52PPP (35 weight percent), PETG (35 weight percent) and ITR20 (30 weight percent) in Comparative Example 17; 55PPP (35 weight percent), PETG (35 weight percent) and ITR20 (30 weight percent) in Comparative Example 18; while Comparative Example 19 comprises 55PPP (25 weight percent), PETG (25 weight percent) and ITR20 (50 weight percent).

**Table 15:**

| | CEx.15 | CEx.16 | CEx.17 | CEx.18 | Ex.11 | Ex.12 | Ex 13 | CEx 19 |
|---|---|---|---|---|---|---|---|---|
| 36PPP | 35 | 0 | 0 | 0 | 25 | 0 | 0 | 0 |
| 48PPP | 0 | 35 | 0 | 0 | 0 | 25 | 0 | 0 |
| 52PPP | 0 | 0 | 35 | 0 | 0 | 0 | 25 | 0 |
| 55PPP | 0 | 0 | 0 | 35 | 0 | 0 | 0 | 25 |
| PETG | 35 | 35 | 35 | 35 | 25 | 25 | 25 | 25 |
| ITR20 | 30 | 30 | 30 | 30 | 50 | 50 | 50 | 50 |
| Transmission (%) | < 50 | < 50 | < 50 | < 50 | 75 | 81 | 67 | 61 |
| Haze (%) | > 50 | > 50 | > 50 | > 50 | 10 | 10 | 28 | > 50 |
| HDT | 96.9 | 98.9 | 97.7 | 97.7 | 104 | 107 | 107 | 107 |
| Tensile Mod (MPa) | 2700 | 2680 | 2770 | 2770 | 2670 | 2690 | 2750 | 2780 |
| Elong. @ brk (%) | 116 | 72 | 50 | 44 | 114 | 74 | 54 | 40 |
| RT Dynatup total energy (J) | 74 | 68 | 63 | 61 | 69 | 46 | 67 | 37 |

Table 15 show that transparent or translucent blends of PPP-copolymer with PETG could be made by addition of ITR20 as the third component (Ex.11, EX 12 and E.13). The level of PPP in the copolymer and ratio of blend constituents influence the optical properties (CEx.14-CEx.19)

**Table 16**

| | CEx. 15 | Ex.11 | Ex.14 |
|---|---|---|---|
| 36PPP | 35 | 25 | 13 |
| PETG | 35 | 25 | 45 |
| ITR20 | 30 | 50 | 42 |
| Transmission (%) | < 50 | 75 | 86 |
| Haze (%) | > 50 | 10 | 2 |
| HDT | 96.9 | 104 | 90 |
| Tensile Mod (MPa) | 2700 | 2670 | 2510 |
| Elong. @ brk (%) | 116 | 114 | 130 |
| RT Dynatup total energy (J) | 74 | 69 | 70 |

The Examples Ex.11 and Ex.14 in Table 16 illustrate transparent terblends of PPP copolymer, PETG and ITR20 at certain ratios of the 3 components. However, when the amount of PPP copolymer in the blend is more, the optical properties are influenced.

### EXAMPLES 15-20

The Examples 15-20 were made using the method described in the general procedure above. The Examples 15-20 comprised of PPP copolycarbonate of varying PPP content with PCTG as the polyester component. The amount of the components in the composition was 36PPP (75 weight percent), PCTG (25 weight percent) in Example 15. In Example 16 in addition to 36PPP (50 weight percent), PCTG (25 weight percent), BPA polycarbonate (25 weight percent) was also added. In Example 17 the composition comprised 36PPP (50 weight percent), PCTG (50 weight percent), and 36PPP (25 weight percent), PCTG (75 weight percent) in Example 18. Examples 19 and 20 comprised varying amount of 48PPP copolycarbonate and some amount of BPA polycarbonate. In Example 19 48PPP (10 weight percent), PCTG (25 weight percent) and BPA polycarbonate (65 weight percent); while 48PPP (25 weight percent), PCTG (25 weight percent), and BPA polycarbonate (50 weight percent) in case of Example 20.

### EXAMPLES 21-22

The Examples 21 and 22 were prepared using the general procedure described above. The examples 21 and 22 in addition to varying amounts of PPP copolycarbonate also comprised of 1TR20. The Example 21 comprised 48PPP (10 weight percent) while Example 22 comprised 55PPP(10 weight percent). Both examples 21 and 22 comprised of PCTG (25 weight percent) and 1TR (65 weight percent).

### COMPARATIVE EXAMPLE 20

The Comparative Example 20 (CEx.20) was synthesized using the general procedure however in this case no copolycarbonate comprising PPP was added. The CEx.20 comprised of Polycarbonate (75 weight percent) and polyester being PCTG (25 weight percent).

### COMPARATIVE EXAMPLES 21-23

The Comparative Examples 21-23 (CEx.21-23) were synthesized using the general procedure. While Comparative Example 21 comprised 52PPP (75 weight percent) and about 25 weight percent of PCTG, Comparative Examples 22 was made of 59PPP (75 weight percent) and about 25 weight percent of PCTG. The Comparative Example 23 comprised BPA polycarbonate (40 weight percent) in addition to 48PPP (35 weight percent) and about 25 weight percent of PCTG.

**Table 17**

| | CEx.21 | Ex.15 | Ex.16 |
|---|---|---|---|
| PC | 75 | 0 | 25 |
| 36PPP | 0 | 75 | 50 |
| PCTG | 25 | 25 | 25 |
| Transmission (%) | 86 | 83 | 83 |
| Haze(%) | 2 | 5 | 6 |
| HDT | 109 | 122 | 118 |

From Table 17 examples Ex.15 and Ex. 16 show that heat is improved without affecting the optical properties (see CEx.21).

**Table 18**

| | Ex.15 | Ex.17 | Ex.18 |
|---|---|---|---|
| 36PPP | 75 | 50 | 25 |
| PCTG | 25 | 50 | 75 |
| Transmission (%) | 83 | 77 | 77 |
| Haze (%) | 5 | 8 | 8 |
| HDT | 122 | 94 | 83 |
| Tensile Mod (MPa) | 2450 | 2190 | 1910 |
| Elong. @ brk (%) | 120 | 1.12 | 151 |
| RT Dynatup total energy (J) | 65 | 65 | 65 |

Table 18 depicts that blends with good heat and mechanical properties are obtained with PCTG and PPP level in copolycarbonate is 36 weight percent.

**Table 19**

| | CEx.21 | Ex.15 | CEx.22 | CEx.23 |
|---|---|---|---|---|
| PC | 75 | 0 | 0 | 0 |
| 36PPP | 0 | 75 | 0 | 0 |
| 52PPP | 0 | 0 | 75 | 0 |
| 59PPP | 0 | 0 | 0 | 75 |
| PCTG | 25 | 25 | 25 | 25 |
| Transmission (%) | 86 | 83 | < 50 | < 50 |
| Haze (%) | 2 | 5 | > 50 | > 50 |
| HDT | 109 | 122 | 134 | 150 |

Table 19 shows that heat improvement of PCTG with PPP-copolymers is obtained as in Ex.15. However as the amount of PPP -level in the copolycarbonate increases optical properties are affected (CEx.22 and CEx.23)

**Table 20**

| | CEx. 21 | Ex. 19 | Ex.20 | CEx. 24 |
|---|---|---|---|---|
| PC | 75 | 65 | 50 | 40 |
| 48PPP | 0 | 10 | 25 | 35 |
| PCTG | 25 | 25 | 25 | 25 |
| Transmission (%) | 86 | 86 | 70 | < 50 |
| Haze (%) | 2 | 2 | 23 | > 50 |
| HDT | 109 | 116 | 120 | 122 |
| Tensile Mod (MPa) | 2260 | 2300 | 2360 | 2410 |
| Elong. @ brk (%) | 120 | 120 | 90 | 90 |
| RT Dynatup total energy (J)75 | 75 | 69 | 120 | 122 |

From Table 20, Ex. 19 and Ex. 20 show that addition of polycarbonate to the blend of PPP copolycarbonate and PCTG improve the heat and the optical properties. However, the optical properties are affected by ratios of the three components in the blend (CEx. 24).

**Table 21**

| | CEx.21 | Ex.19 | Ex.21 | CEx.22 |
|---|---|---|---|---|
| 48PPP | 0 | 10 | 10 | 10 |
| PCTG | 25 | 25 | 25 | 25 |
| PC | 75 | 65 | 0 | 0 |
| ITR20 | 0 | 0 | 65 | 0 |
| ITR90 | 0 | 0 | 0 | 65 |
| Transmission (%) | 86 | 86 | 73 | < 50 |
| Haze(%) | 2 | 2 | 23 | > 50 |
| HDT | 109 | 116 | 109 | 103 |
| Tensile Mod (MPa) | 2260 | 2300 | 2400 | 2460 |
| Elong. @ brk (%) | 120 | 120 | 120 | 120 |
| RT Dynatup total energy (J) | 75 | 69 | 70 | 59 |

The Example Ex.17 in Table 21 show that addition of ITR20 to the blend of PPP copolycarbonate and PCTG improve the heat and the optical properties without loss of mechanical properties. However, the optical properties are affected by the level of ITR in the ITR-PC copolymer (Ex.17 and CEx. 25).

**Table 22**

| | Ex.21 | Ex.22 |
|---|---|---|
| 48PPP | 10 | |
| 55PPP | | 10 |
| PCTG | 25 | 25 |
| ITR20 | 65 | 65 |
| Transmission (%) | 73 | 62 |
| Haze (%) | 23 | 44 |
| HDT | 116 | 107 |
| Tensile Mod (MPa) | 2300 | 2460 |
| Elong. @ brk (%) | 120 | 120 |
| RT Dynatup total energy (J) | 69 | 70 |

Ex. 21 and Ex 22 illustrate that translucent blends with good heat and mechanical properties are observed when ITR-PC copolymers are present in the mixture.

**Table 23**

| | Ex.15 | Ex.23 | Ex.24 |
|---|---|---|---|
| 36PPP | 75 | 65 | 45 |
| t-EXL | 0 | 10 | 30 |
| PCTG | 25 | 25 | 25 |
| Transmission (%) | 83 | 82 | 78 |
| Haze(%) | 5 | 5 | 9 |
| HDT | 122 | 120 | 116 |
| Tensile Mod (MPa) | 2450 | 2260 | 2180 |
| Elong. @ brk (%) | 120 | 120 | 120 |
| RT Dynatup total energy (J) | 65 | 73 | 77 |
| NI-RT (J/m) | 94 | 148 | 717 |

Table 23 illustrates that improvement of Notched Izod properties without compromising on the heat by addition of t-EXL to the blend of PCTG with PPP-copolymers (Ex. 23 and Ex. 24).

### EXAMPLES 25-28

The procedure of Example I was followed, except that the compositions were made from the components as indicated in Table 24. More particularly, Table 24 illustrates useful compositions blending a high heat polycarbonate (APEC 9353) with PCCD and an elastomer (Ecdel 9966).

**Table 24**

| | Ex 25 | Ex 26 | Ex 27 | Ex 28 |
|---|---|---|---|---|
| APEC 9353 | 70 | 89 | 85 | 80 |
| Ecde19966 | 20 | 8.75 | 5 | 20 |
| PCCD | 10 | 2.25 | 10 | 0 |
| Transmission (%) | 87 | 87 | 88 | 88 |
| Haze(%) | 4 | 2 | 2 | 2 |
| HDT | 99 | 132 | 131 | 108 |
| Tensile Mod (MPa) | 3400 | 3720 | 3400 | 3540 |
| Elong. @ brk (%) | 40 | 60 | 40 | 25 |
| RT Dynatup total energy (J) | 54 | 53 | 53 | 55 |

### Discussion

The results shown in Table 24 indicate that optical properties were maintained over the indicated compositions.

### TESTING PROCEDURES

The following testing procedures were used.

Melt Volume Rate (MVR) on pellets (dried for 2 hours at 120 °C prior to measurement) was measured according to ISO 1133 method at dwelling time of 240 seconds and 0.0825 inch (2.1 mm) orifice.

Capillary viscosity, which is another indicator of melt-flow was measured by ASTM D3835 or ISO D11433. Dried pellets were extruded through a capillary Rheometer and the force at varied shear rates was determined to estimate the shear viscosity.

Tensile properties were tested according to ISO 527 on 150 x 10 x 4 mm (length x wide x thickness) injection molded bars at 23 °C with a crosshead speed of 5 mm/min. Izod unnotched impact was measured at 23 °C with a pendulum of 5.5 Joule on 80 x 10 x 4 mm (length x wide x thickness) impact bars according to ISO 180 method. Flexural properties or three point bending were measured at 23 °C on 80 x 10 x 4 mm (length x wide x thickness) impact bars with a crosshead speed of 2 mm/min according to ISO 178.

In other cases, injection molded parts were tested by ASTM. Notched Izod testing as done on 3 x ½ x 1/8 inch (76.2 x 12.7 x 3.2 mm) bars using ASTM method D256. Bars were notched prior to oven aging; samples were tested at room temperature. Tensile elongation at break was tested on 7x1/8 in. (177.8 x 3.3 mm) injection molded bars at room temperature with a crosshead speed of 2 in./min (50.8 mm/min) for glass filled samples and 0.2 in/min (5.08 mm/min) for un-filled samples by using ASTM D648. Flexural properties were measured using ASTM 790 or ISO 178 method. Biaxial impact testing, sometimes referred to as instrumented impact testing, was done as per ASTM D3763 using a 4 x 1/8 inch (101.6 x 3.2 mm) molded discs. The total energy absorbed by the sample is reported as ft-lbs or J. Testing was done at room temperature on as molded or oven aged samples. Heat Deflection Temperature was tested on five bars having the dimensions 5 x 0.5 x 0.125 inches (127 x 12.7 x 3.2 mm) using ASTM method D648.

A synopsis of all the relevant tests and test methods is given in Table 25

**Table 25: Test Methods and Descriptions**

| | Test Standard | Default Specimen Type | Units |
|---|---|---|---|
| ASTM Flexural Test | ASTM D790 | Bar - 127 x 12.7 x 3.2 mm | Mpa |
| ASTM HDT Test | ASTM D648 | Bar - 127 x 12.7 x 3.2 mm | °C |
| ASTM HDT Test | ASTM D648 | Bar - 127 x 12.7 x 3.2 mm | °C |
| ASTM Filled Tensile Test | ASTM D638 | ASTM Type 1 Tensile bar | Mpa |
| ASTM Izod at Room Temperature | Notched ASTM D256 | Bar - 63.5 x 12.7 x 3.2 mm | J/m |
| ASTM Multiaxial Impact | ASTM D3763 | Disk - 101.6 mm dia x 3.2 mm thick | J |

While the invention has been illustrated and described in typical embodiments, it is not intended to be limited to the details shown, since various modifications and substitutions can be made without departing in any way from the spirit of the present invention. As such, further modifications and equivalents of the invention herein disclosed may occur to persons skilled in the art using no more than routine experimentation, and all such modifications and equivalents are believed to be within the spirit and scope of the invention as defined by the following claims. All Patents and published articles cited herein are incorporated herein by reference.

## Claims

1. A composition of matter comprising a thermoplastic resin composition derived from
i. 20 weight percent to 80 weight percent of a polyester derived from a diol comprising cyclohexane dimethanol and a diacid;
ii. 5 weight percent to 80 weight percent of a copolycarbonate derived from 20 weight percent to 70 weight percent of a 2-hydrocarbyl-3,3-bis(hydroxyaryl)phthalimidine and from about 30 weight percent to about 80 weight percent of a second aromatic dihydroxy compound;
iii. 0 weight percent to 70 weight percent of a thermoplastic resin, C wherein the thermoplastic resin C is selected from the group consisting of a homopolycarbonate, a poly(estercarbonate), a poly(arylatecarbonate) and combinations thereof; and
wherein the resin composition is transparent.

2. The composition of Claim 1, wherein the diacid is selected from the group consisting of linear acids, terephthalic acids, isophthalic acids, phthalic acids, naphthalic acids, cycloaliphatic acids, bicyclo aliphatic acids, decahydro naphthalene dicarboxylic acids, norbornene dicarboxylic acids, bicyclo octane dicarboxylic acids, 1,4-cyclohexanedicarboxylic acid, adipic acid, azelaic acid dicarbox I dodecanoic acid, stilbene dicarboxylic acid, succinic acid, chemical equivalents of the foregoing, and combinations thereof.

3. The composition of Claim 1, wherein the polyester further comprises a second diol, selected from the group consisting of ethylene glycol, propylene glycol, butanediol, pentane diol; dipropylene glycol; 2-methyl-1,5-pentane diol; 1,6-hexane diol; dimethanol decalin, dimethanol bicyclo octane; triethylene glycol; 1,10- decan diol; tricyclodecane dimethanol; hydrogenated bisphenol-A, tetramethyl cyclobutane diol chemical equivalents of the foregoing, and combinations thereof.

4. The composition of Claim 1, wherein the 2-hydrocarbyl-3,3-bis(4-hydroxyaryl)phthalimidine comprises less than or equal to 1,000 parts per million of a 2-hydrocarbyl-3-{(4-hydroxyaryl)(2-hydroxyaryl)}phthalimidine relative to an overall weight of the 2-hydrocarbyl-3,3-bis(4-hydroxyaryl)phthalimidine, wherein the 2- hydrocarbyl-3-{(4-hydroxyaryl)(2-hydroxyaryl)} phthalimidine has a formula of: 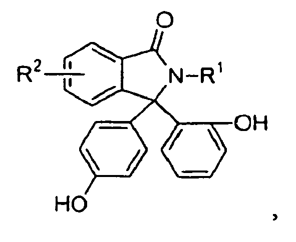 wherein R¹ is selected from the group consisting of a hydrogen and a hydrocarbyl group, and R² is selected from the group consisting of a hydrogen, a hydrocarbyl group, and a halogen.

5. The composition of Claim 4, wherein the 2-hydrocarbyl-3,3-bis(4-hydroxyaryl)phthalimidine further comprises less than or equal to 1.000 parts per million of a substituted or an unsubstituted phenolphthalein relative to an overall weight of the 2-hydrocarbyl-3,3-bis(4-hydroxyaryl)phthalimidine.

6. The composition of Claim 1, wherein the 2-hydrocarbyl-3,3-bis(4-hydroxyaryl)phthalimidine is a 2-phenyl-3,3-bis(4-hydroxyphenyl;)phthalimidine.

7. The composition of Claim 6, wherein the 2-hydrocarbyl-3,3-bis(4-hydroxyaryl)phthalimidine comprises less than or equal to 1,000 parts per million of 2-phenyl-3-{(4-hydroxyphenyl)(2-hydroxyphenyl)}phthalimidine relative to an overall weight of 2-phenyl-3,3-bis(4-hydroxyphenyl)phthalimidine.

8. The composition of Claim 6 wherein the 2-hydrocarbyl-3,3-bis(4-hydroxyaryl)phthalimidine further comprises less than or equal to 1,000 parts per million of phenolphthalein relative to an overall weight of the 2-phenyl-3,3-bis(4-hydroxyphenyl)phthalimidine.

9. The composition of Claim 1, wherein the second aromatic dihydroxy compound is of the formula HO-D-OH, wherein D has the structure of formula: 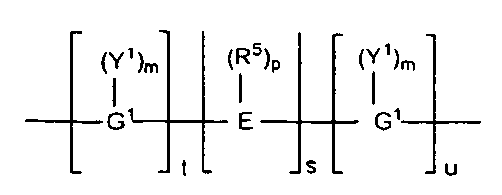 wherein G¹ represents an aromatic group; E comprises a sulfur-containing linkage, sulfide, sulfoxide, sulfone; a phosphorus-containing linkage, phosphinyl, phosphonyl; an ether linkage; a carbonyl group; a tertiary nitrogen group; a silicon- containing linkage; silane; siloxy; a cycloaliphatic group; cyclopentytidene, cyclohexylidene, 3,3,5-trimethylcyclohexylidene, methylcyclohexylidenec, 2-[2.2.1]- bicycloheptylidene, neopentylidene, cyclopentadecylidene, cyclododecylidene, adamantylidene; an alkylene or alkylidene group, which group may optionally be part of one or more fused rings attached to one or more aromatic groups bearing one hydroxy substituent; an unsaturated alkylidene group; or two or more alkylene or alkylidene groups connected by a moiety different from alkylene or alkylidene and selected from the group consisting of an aromatic linkage, a tertiary nitrogen linkage; an ether linkage; a carbonyl linkage; a silicon-containing linkage, silane, siloxy; a sulfur-containing linkage, sulfide, sulfoxide, sulfone; a phosphorus-containing linkage, phosphinyl, and phosphonyl;
R⁵ independently at each occurrence comprises a mono-valent hydrocarbon group, aliphatic, aromatic, or a cycloaliphatic radical;
Y¹ independently at each occurrence is selected from the group consisting of an inorganic atom, a halogen, an inorganic group, a nitro group; an organic group, a monovalent hydrocarbon group, alkenyl, allyl, alkyl, aryl, aralkyl, alkaryl, cycloalkyl, and an alkoxy group;
m represents any integer from and including zero through the number of replaceable hydrogens on A¹ available for substitution;
p represents an integer from and including zero through the number of replaceable hydrogens on E available for substitution;
t represents an integer equal to at least one;
s represents an integer equal to either zero or one;
u represents any integer including zero; and
wherein D is not a bis(hydroxyl aryl)phthalimidine group.

10. The composition of Claim 1, wherein the second aromatic dihydroxy compound is selected from the group consisting of 4,4'-(3,3,5- trimethylcyclohexylidene)diphenol, 4,4'-bis(3,5-dimethyl)diphenol, 1,1-bis(4-hydroxy-3- methylphenyl)cyclohexane, 1,1-bis(4'-hydroxy-3'methylphenyl)cyclohexane, 4,4'-[1-methyl-4-(1-methylethyl)-1,3-cyclohcxandiyl]biaphenol, 4-[1-[3-(4-hydroxyphenyl)-4-methylcyclohexyl]-1-methyl-ethyl]-phenol, 3,8-dihydroxy-5a,10b-diphenylcoumarano- 2',3',2,3-coumarane, 4,4-bis(4-hydroxyphenyl)heptane, 2,4'-dihydroxydiphenylmethane, bis(2-hydroxyphenyl)methane, bis(4- hydroxyphenyl)methane, bis(4-hydroxy-5-nitrophenyl)methane, bis(4-hydroxy-2,6-dimethyl-3-methoxyphenyl)methane, 1,1-bis(4-hydroxyphenyl)ethane, 1,1-bis(4- hydroxy-2-chlorophenyl)ethane, 2,2-bis(4-hydroxyphenyl)propane, 2,2-bis(3-phenyl-4- hydroxyphenyl)propane, 2,2-bis(4-hydroxy-3-methylphenyl)propane, 2,2-bis(4-hydroxy-3-ethylphenyl)propane, 2,2-bis(4-hydroxy-3-isopropylphenyl)propane, 2,2-bis(4-hydroxy-3,5-dimethylphenyl)propane, 2,2-bis(3,5 ,3',5'-tetrachloro-4,4'- dihydroxyphenyl)propane, bis(4-hydroxyphenyl)cyclohexylmethane, 2,2-bis(4-hydroxyphenyl)-1-phenylpropane, 2,4'-dihydroxyphenyl sulfone, 4,4'-dihydroxydiphenylsulfone, 9,9-bis(4-hydroxyphenyl)fluorene, 4,4' dihydroxy-1,1-biphenyl, 2,6-dihydroxy naphthalene; hydroquinone; resorcinol, C1-3 alkyl-substituted resorcinols, 3-(4-hydroxyphenyl)-1,1,3-trimethylindan-5-ol, 1-(4-hydroxyphenyl)-1,3,3-trimethylindan-5-ol, and 2,2,2',2'-tetrahydro-3,3,3',3'-tetramethyl-1,1'-spirobi[1H-indene]-6,6'-diol.

11. The composition of Claim 1, wherein the second aromatic dihydroxy compound is bisphenol A.

12. The composition of Claim 1, wherein the thermoplastic resin C is selected from the group consisting of a homopolycarbonate, a poly(estercarbonate) a poly(arylatecarbonate) and combinations thereof.

13. The composition of Claim 1, wherein the thermoplastic C is a poly(arylatecarbonate) .

14. The composition of Claim 1, wherein the thermoplastic C is a homopolycarbonate derived from the second aromatic dihydroxy compound.

15. A process comprising:
1. mixing a polyester, a copolycarbonate and a thermoplastic C, to form a first mixture;
2. heating the first mixture at a temperature sufficiently high to form a composition of matter comprising a thermoplastic resin composition derived from
a. 20 weight percent to 80 weight percent of a polyester derived from a diol comprising cyclohexane dimethanol and a diacid;
b. 5 weight percent to 80 weight percent of a copolycarbonate derived from 20 weight percent to 70 weight percent of a 3-hydrocarbyl-3,3-bis(hydroxyaryl)phthalimidine and from 30 weight percent to 80 weight percent of a second aromatic dihydroxy compound;
c. 0 weight percent to 70 weight percent of a thermoplastic C; and
wherein the resin composition is transparent.

## Patentansprüche

1. Materialzusammensetzung, umfassend eine thermoplastische Harzzusammensetzung, die abgeleitet ist von
i. 20 Gew.-% bis 80 Gew.-% eines von einem Diol, umfassend Cyclohexandimethanol, und einer Disäure abgeleiteten Polyesters;
ii. 5 Gew.-% bis 80 Gew.-% eines von 20 Gew.-% bis 70 Gew.-% eines 2-Hydrocarbyl-3,3-bis(hydroxyaryl)phthalimidin und von etwa 30 Gew.-% bis etwa 80 Gew.-% einer zweiten aromatischen Dihydroxyverbindung abgeleiteten Copolycarbonats;
iii. 0 Gew.-% bis 70 Gew.-% eines thermoplastischen Harzes C, worin das thermoplastische Harz C aus der Gruppe bestehend aus einem Homopolycarbonat, einem Poly(estercarbonat), einem Poly(arylatcarbonat) und Kombinationen davon, gewählt ist; und
worin die Harzzusammensetzung transparent ist.

2. Zusammensetzung nach Anspruch 1, worin die Disäure gewählt ist aus der Gruppe bestehend aus linearen Säuren, Terephthalsäuren, Isophthalsäuren, Phthalsäuren, Naphthalsäuren, cycloaliphatischen Säuren, bicycloaliphatischen Säuren, Decahydronaphthalindicarbonsäuren, Norbornendicarbonsäuren, Bicyclooctandicarbonsäuren, 1,4-Cyclohexandicarbonsäure, Adipinsäure, Azelainsäure, Dicarboxyldodecansäure, Stilbendicarbonsäure, Succinsäure, chemischen Äquivalenten der Vorhergenannten und Kombinationen davon.

3. Zusammensetzung nach Anspruch 1, worin der Polyester weiterhin ein zweites Diol umfaßt, gewählt aus der Gruppe bestehend aus Ethylenglycol, Propylenglycol, Butandiol, Pentandiol; Dipropylenglycol; 2-Methyl-1,5-pentandiol; 1,6-Hexandiol; Dimethanoldecalin; Dimethanolbicyclooctan; Triethylenglycol; 1,10-Decandiol; Tricyclodecandimethanol; hydriertem Bisphenol-A, Tetramethylcyclobutandiol, chemischen Äquivalenten der Vorhergenannten und Kombinationen davon.

4. Zusammensetzung nach Anspruch 1, worin das 2-Hydrocarbyl-3,3-bis(4-hydroxyaryl)phthalimidin gleich oder weniger als 1.000 ppm eines 2-Hydrocarbyl-3-{(4-hydroxyaryl)(2-hydroxyaryl)}phthalimidins in bezug auf ein Gesamtgewicht des 2-Hydrocarbyl-3,3-bis(4-hydroxyaryl)phthalimidins enthält, worin das 2-Hydrocarbyl-3-{(4-hydroxyaryl)(2-hydroxyaryl)}phthalimidin eine Formel: 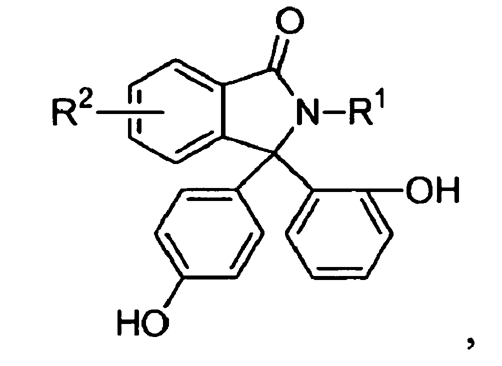 aufweist, worin R¹ gewählt ist aus der Gruppe bestehend aus einem Wasserstoff und einer Hydrocarbylgruppe und R² gewählt ist aus der Gruppe bestehend aus einem Wasserstoff, einer Hydrocarbylgruppe und einem Halogen.

5. Zusammensetzung nach Anspruch 4, worin das 2-Hydrocarbyl-3,3-bis(4-hydroxyaryl)phthalimidin weiterhin gleich oder weniger als 1.000 ppm eines substituierten oder eines unsubstituierten Phenolphthaleins in bezug auf ein Gesamtgewicht des 2-Hydrocarbyl-3,3-bis(4-hydroxyaryl)phthalimidins enthält.

6. Zusammensetzung nach Anspruch 1, worin das 2-Hydrocarbyl-3,3-bis(4-hydroxyaryl)phthalimidin ein 2-Phenyl-3-3-bis(4-hydroxyphenyl)phthalimidin ist.

7. Zusammensetzung nach Anspruch 6, worin das 2-Hydrocarbyl-3,3-bis(4-hydroxyaryl)phthalimidin gleich oder weniger als 1.000 ppm 2-Phenyl-3-{(4-hydroxyphenyl)(2-hydroxyphenyl)}phthalimidin in bezug auf ein Gesamtgewicht von 2-Phenyl-3,3-bis(4-hydroxyphenyl)phthalimidin enthält.

8. Zusammensetzung nach Anspruch 6, worin das 2-Hydrocarbyl-3,3-bis(4-hydroxyaryl)phthalimidin weiterhin gleich oder weniger als 1.000 ppm Phenolphthalein in bezug auf ein Gesamtgewicht von 2-Phenyl-3,3-bis(4-hydroxyphenyl)phthalimidin enthält.

9. Zusammensetzung nach Anspruch 1, worin die zweite aromatische Dihydroxyverbindung die Formel HO-D-OH aufweist, worin D die Struktur der Formel: 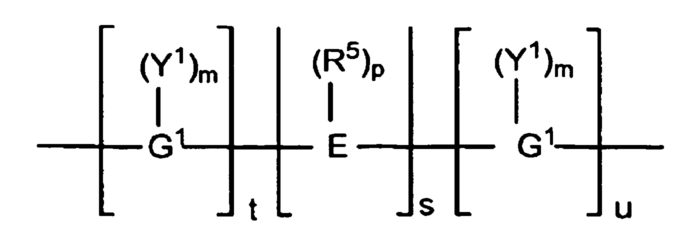 aufweist, worin G¹ eine aromatische Gruppe darstellt; E eine Schwefel enthaltende Bindung, Sulfid, Sulfoxid, Sulfon; eine Phosphor enthaltende Bindung, Phosphinyl, Phosphonyl; eine Ether-Bindung; eine Carbonylgruppe; eine tertiäre Stickstoffgruppe; eine Silizium enhaltende Bindung; Silan, Siloxy; eine cycloaliphatische Gruppe; Cyclopentyliden, Cyclohexyliden, 3,3,5-Trimethylcyclohexyliden, Methylcyclohexyliden, 2-[2.2.1]-Bicycloheptyliden, Neopentyliden, Cyclopentadecyliden, Cyclododecyliden, Adamantyliden; eine Alkylen- oder Alkylidengruppe, welche Gruppe gegebenenfalls Teil von einem oder mehreren kondensierten Ring(en) ist, der (die) an eine oder mehrere aromatische Gruppe(n), welche einen Hydroxysubstituenten tragen, festgelegt ist (sind); eine ungesättigte Alkylidengruppe; oder zwei oder mehrere Alkylen- oder Alkylidengruppen, die durch einen von Alkylen oder Alkyliden verschiedenen Rest verbunden sind und der gewählt ist aus der Gruppe bestehend aus einer aromatischen Bindung, einer tertiären Stickstoffbindung; einer Etherbindung; einer Carbonylbindung; einer Silizium enthaltende Bindung, Silan, Siloxy; einer Schwefel enthaltenden Bindung, Sulfid, Sulfoxid, Sulfon; einer Phosphor enthaltenden Bindung, Phosphinyl und Phosphonyl;
R⁵ unabhängig bei jedem Vorkommen eine monovalente Kohlenwasserstoffgruppe, ein aliphatisches, aromatisches oder cycloaliphatisches Radikal umfaßt;
Y¹ unabhängig bei jedem Vorkommen aus der Gruppe bestehend aus einem anorganischen Atom, einem Halogen; einer anorganischen Gruppe, einer Nitrogruppe; einer organischen Gruppe, einer monovalenten Kohlenwasserstoffgruppe, Alkenyl-, Allyl-, Alkyl-, Aryl-, Aralkyl-, Alkaryl-, Cycloalkyl- und einer Alkoxy-Gruppe gewählt ist;
m jede ganze Zahl von Null und Null beinhaltend bis zu der Anzahl von für eine Substitution verfügbaren, ersetzbaren Wasserstoffen auf A¹ darstellt;
p eine ganze Zahl von Null und Null beinhaltend bis zu der Anzahl von für eine Substitution verfügbaren ersetzbaren Wasserstoffen auf E darstellt;
t eine ganze Zahl von gleich oder wenigstens Eins darstellt;
s eine ganze Zahl gleich Null oder Eins darstellt;
u jede ganze Zahl Null miteingeschlossen darstellt; und
worin D eine Bis(hydroxylaryl)phthalimidingruppe nicht darstellt.

10. Zusammensetzung nach Anspruch 1, worin die zweite aromatische Dihydroxyverbindung gewählt ist aus der Gruppe bestehend aus 4,4'-(3,3,5-Trimethylcyclohexyliden)diphenol, 4,4'-Bis(3,5-dimethyl)diphenol, 1,1-Bis(4-hydroxy-3-methylphenyl)cyclohexan, 1,1-Bis(4'-hydroxy-3'methylphenyl)cyclohexan, 4,4'-[1-Methyl-4-(1-methylethyl)-1,3-cyclohexandiyl]bisphenol, 4-[1-[3-(4-Hydroxyphenyl)-4-methylcyclohexyl]-1-methyl-ethyl]-phenol, 3,8-Dihydroxy-5a,10b-diphenyl-coumarano-2',3',2,3-coumarin, 4,4-Bis(4-hydroxyphenyl)-heptan, 2,4'-Dihydroxydiphenylmethan, Bis(2-hydroxyphenyl)methane, Bis(4-hydroxyphenyl)methan, Bis(4-hydroxy-5-nitrophenyl)methan, Bis(4-hydroxy-2,6-dimethyl-3-methoxyphenyl)methan, 1,1-Bis(4-hydroxyphenyl)ethan, 1,1-Bis(4-hydroxy-2-chlorphenyl)ethan, 2,2-Bis(4-hydroxyphenyl)propan, 2,2-Bis(3-phenyl-4-hydroxyphenyl)propan, 2,2-Bis(4-hydroxy-3-methylphenyl)propan, 2,2,-Bis(4-hydroxy-3-ethylphenyl) propan, 2,2-Bis(4-hydroxy-3-isopropylphenyl)propan, 2,2-Bis(4-hydroxy-3,5-dimethylphenyl)propan, 2,2-Bis(3,5,3',5'-tetrachlor-4,4'-dihydroxyphenyl)propan, Bis(4-hydroxyphenyl)cyclohexylmethan, 2,2-Bis(4-hydroxyphenyl)-1-phenylpropan, 2,4'-Dihydroxyphenylsulfon, 4,4'-Dihydroxydiphenylsulfon, 9,9-Bis(4-hydroxyphenyl)fluoren, 4,4'-Dihydroxy,1,1-biphenyl, 2,6-Dihydroxynaphathalein; Hydrochinon, Resocinol, C1-3 alkylsubstituierte Resorcinole, 3-(4-Hydroxyphenyl)-1,1,3-trimethylindan-5-ol, 1-(4-Hydroxyphenyl)-1,3,3-trimethylindan-5-ol und 2,2,2',2'-tetrahydro-3,3,3',3'-tetramethyl-1,1'-spirobi[1H-inden]-6,6'-diol.

11. Zusammensetzung nach Anspruch 1, worin die zweite aromatische Dihydroxyverbindung Bisphenol A ist.

12. Zusammensetzung nach Anspruch 1, worin das thermoplastische Harz C aus der Gruppe bestehend aus einem Homopolycarbonat, einem Poly(estercarbonat), einem Poly(arylatcarbonat) und Kombinationen davon gewählt ist.

13. Zusammensetzung nach Anspruch 1, worin der Thermoplast C ein Poly(arylatcarbonat) ist.

14. Zusammensetzung nach Anspruch 1, worin das Thermoplast C ein von der zweiten aromatischen Dihydroxyverbindung abgeleitetes Homopolycarbonat ist.

15. Verfahren umfassend:
1. Mischen eines Polyesters, eines Copolycarbonats und eines Thermoplasten C, um eine erste Mischung auszubilden;
2. Erhitzen der ersten Mischung auf eine Temperatur, die ausreichend hoch ist, um eine Materialzusammensetzung, umfassend eine thermoplastische Harzzusammensetzung, die abgeleitet ist von
a. 20 Gew.-% bis 80 Gew.-% eines von einem Diol, umfassend Cyclohexandimethanol, und einer Disäure abgeleiteten Polyesters;
b. 5 Gew.-% bis 80 Gew.-% eines von 20 Gew.-% bis 70 Gew.-% eines 2-Hydrocarbyl-3,3-bis(hydroxyaryl)phthalimidin und von 30 Gew.-% bis 80 Gew.-% einer zweiten aromatischen Dihydroxyverbindung abgeleiteten Polycarbonats;
c. 0 Gew.-% bis 70 Gew.-% eines Thermoplasten C herzustellen; und
worin die Harzzusammensetzung transparent ist.

## Revendications

1. Composition de matière comprenant une composition de résine thermoplastique dérivée de
i. 20 % en poids à 80 % en poids d'un polyester dérivé d'un diol comprenant du cyclohexane diméthanol et un diacide ;
ii. 5 % en poids à 80 % en poids d'un copolycarbonate dérivé de 20 % en poids à 70 % en poids d'un 2-hydroxycarbyl-3,3-bis(hydroxyaryl)phtalimidine et d'environs 30 % en poids à environs 80 % en poids d'un deuxième composé dihydroxy-aromatique ;
iii. 0 % en poids à 70 % en poids d'une résine thermoplastique C dans laquelle la résine thermoplastique C est sélectionnée parmi le groupe consistant en un homopolycarbonate, un poly(estercarbonate), un poly(acrylatcarbonate) et les combinaisons de ceux-ci ; et
dans laquelle la composition de résine est transparente.

2. Composition de matière selon la revendication 1, dans laquelle le diacide est sélectionné parmi le groupe consistant en les acides linéaires, les acides téréphtaliques, les acides isophtaliques, les acides phtaliques, les acides naphtaliques, les acides cycloaliphatiques, les acides bicycloaliphatiques, les acides decahydronaphtalène-dicarboxyliques, les acides norbornène-dicarboxyliques, les acides bicyclooctane-dicarboxyliques, l'acide 1,4-cylcohexane-dicarboxylique, l'acide adipique, l'acide azélaique, l'acide dodécanoique-dicarboxylique, l'acide stilbène-dicarboxylique, l'acide succinique, les équivalents chimiques des matières suscitées, et les combinaisons de ceux-ci.

3. Composition selon la revendication 1, dans laquelle le polyester comprend en outre un deuxième diol, sélectionné parmi le groupe consistant en l'éthylène glycol, le propylène glycol, le butane diol, le pentane diol ; le dipropylène glycol ; le 2-méthyl-1,5-pentane diol ; le 1,6-hexane diol ; le diméthanol décaline, le diméthanol bicyclooctane ; le triéthylène glycol ; le 1,10-décane diol ; le tricyclodécane diméthanol ; le bisphénol A hydrogéné, le cyclobutane diol tétraméthyle, les équivalents chimiques des matières suscitées, et les combinaisons de ceux-ci.

4. Composition selon la revendication 1, dans laquelle le 2-hydrocarbyl-3,3-bis(4-hydroxyaryl)phtalimidine comprend moins de ou égale à 1000 parts per million d'un 2-hydrocarbyl-3-{(4-hydroxyaryl)(2-hydroxyaryl)}phtalimidine en relation à un poids total du 2-hydrocarbyl-3,3-bis(4-hydroxyaryl)phtalimidine, dans lequel le 2-hydrocarbyl-3-{(4-hydroxyaryl)(2-hydroxyaryl)}phtalimidine a la formule de : 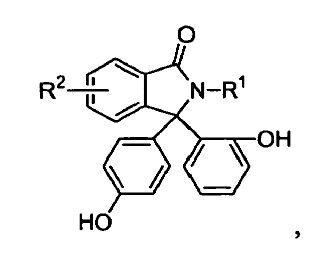 dans laquelle R¹ est sélectionné parmi le groupe consistant en un hydrogène, et un groupe hydrocarbyl, et R² est sélectionné parmi le groupe consistant en un hydrogène, un groupe hydrocarbyl et un halogène.

5. Composition selon la revendication 4, dans laquelle le 2-hydrocarbyl-3,3-bis(4-hydroxyaryl)phtalimidine comprend en outre moins de ou égale à 1000 parts per million d'une phénolphtaléine substituée ou non substituée en relation à un poids total du 2-hydrocarbyl-3,3-bis(4-hydroxyaryl)phtalimidine.

6. Composition selon la revendication 1, dans laquelle le 2-hydrocarbyl-3,3-bis(4-hydroxyaryl)phtalimidine est un 2-phényl-3,3-bis(4-hydroxphényl)phtalimidine.

7. Composition selon la revendication 6, dans laquelle le 2-hydrocarbyl-3,3-bis(4-hydroxyaryl)phtalimidine comprend moins de ou égale à 1000 parts per million de 2-phényl-3-{(4-hydroxphényl)(2-hydroxphényl)}phtalimidine en relation à un poids total de 2-phényl-3,3-bis(4-hydroxphényl)phtalimidine.

8. Composition selon la revendication 6, dans laquelle le 2-hydrocarbyl-3,3-bis(4-hydroxyaryl)phtalimidine comprend en outre moins de ou égale à 1000 parts per million de phénolphtaléine en relation à un poids total du 2-phényl-3,3-bis(4-hydroxphényl)phtalimidine.

9. Composition selon la revendication 1, dans laquelle le deuxième composé dihydroxy-aromatique est de la formule HO-D-OH, dans laquelle D a la structure de la formule : 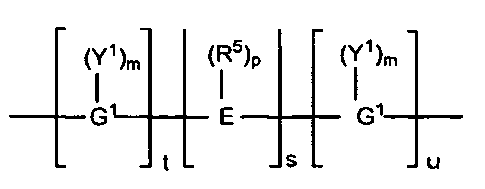 dans laquelle G¹ représente un groupe aromatique ; E comprend un lien contenant du soufre, le sulfure, le sulfoyxde, le sulfone ; un lien contenant du phosphore, le phosphinyle, le phosphonyle ; un lien éthérique ; un groupe carbonyle ; un groupe d'azote tertiaire ; un lien contenant du silicium ; le silane ; le siloxy ; un groupe cycloaliphatique ; le cyclopentylidène, le cyclohexylidène ; le 3,3,5-triméthylcyclohexylidène, le méthylcyclohexylidène, le 2-[2.2.1]-bicycloheptylidène, le neopentylidène, le cyclopentadecylidène, le cyclododecylidène, l'adamantylidène ; un groupe alkylène ou alkylidène, lequel groupe peut, en cas échéant, être part d'un ou plusieurs anneaux fusionnés et attachés à un ou plusieurs groupes aromatiques portant un substituent hydroxy ; un groupe alkylidène insaturé ; ou deux ou plusieurs groups alkylène ou alkylidène reliés par un groupement différent d'alkylène ou d'alkylidène et sélectionné parmi le groupe consistant en un lien aromatique, un lien d'azote tertiaire ; un lien éthérique ; un lien carbonyle ; un lien contentant du silicium, le silane, le siloxy ; un lien contentant du soufre, le sulfide, le sulfoxide, le sulfone ; un lien contenant du phosphore, le phosphinyle, et le phosphonyle ;
R⁵ comprend indépendamment à chaque occurrence un groupe hydrocarboné monovalent aliphatique, aromatique, ou un radical cycloaliphatique ;
Y¹ est sélectionné indépendamment à chaque occurrence parmi le groupe consistant en un atome inorganique, un halogène ; un groupe inorganique, un groupe nitro ; un groupe organique, un groupe hydrocarboné mono-valent, un groupe alkényle, allyle, alkyle, aryle, aralkyle, alkaryle, cycloalkyle, et un groupe alkoxy ;
m représente un nombre entier quelconque compris entre zéro jusqu'au nombre des hydrogènes remplaçables sur A¹ qui sont disponibles pour la substitution ;
p représente un nombre entier compris entre zéro jusqu'au nombre des hydrogènes remplaçables sur E qui sont disponibles pour la substitution ;
t représente un nombre entier égal à au moins un ;
s représente un nombre entier égal à soit zéro soit un ;
u représente un nombre entier quelconque, zéro y compris ; et
dans laquelle D n'est pas un groupe bis(hydroxyle aryle)phtalimidine.

10. Composition selon la revendication 1, dans laquelle le deuxième composé dihydroxy-aromatique est sélectionné parmi le groupe consistant en 4,4'-(3,3,5-triméthylcyclohexylidène)diphénol, 4,4'-bis(3,5-diméthyl)diphénol, 1,1-bis(4-hydroxy-3-méthylphényl)cyclohexane, 1,1-bis(4'-hydroxy-3'-méthylphényl)cyclohexane, 4,4'-[1-méthyl-4-(1-méthyléthyl)-1,3-cyclohexandiylbisphénol, 4-[1-[3-(4-hydroxphényl)-4-méthylcyclohexyl-1-méthyl-éthyl]-phenol, 3,8-dihydroxy-5a, 10b-diphénylcoumarano-2',3',2,3-coumarane, 4,4-bis(4-hydroxyphényl)heptane, 2,4'-dihydroxydiphénylmethane, bis(2-hydroxyphényl)méthane, bis(4-hydroxyphényl)méthane, bis(4-hydroxy-5-nitrophényl)méthane, bis(4-hydroxy-2,6-diméthyl-3-methoxyphényl)méthane, 1,1-bis(4-hydroxyphényl)éthane, 1,1-bis(4-hydroxy-2-chlorophényl)éthane, 2,2-bis(4-hydroxyphényl)propane, 2,2-bis(3-phényl-4-hydroxyphényl)propane, 2,2-bis(4-hydroxy-3-méthylphényl)propane, 2,2-bis(4-hydroxy-3-éthylphényl)propane, 2,2-bis(4-hydroxy-3-isopropylphényl)propane, 2,2-bis(4-hydroxy-3,5-diméthylphényl)propane, 2,2-bis(3,5,3',5'-tétrachloro-4,4'-dihydroxyphényl)propane, bis(4-hydroxyphényl)cyclohexylmethane, 2,2-bis(4-hydroxyphényl)-1-phénylpropane, 2,4'-dihydroxyphénylsulfone, 4,4'-dihydroxydiphénylsulfone, 9,9-bis(4-hydroxyphényl)flourène, 4,4'-dihydroxy-1,1-biphényl-2,6-dihydroxynaphtalène ; l'hydroquinone, le résorcinol, les résorcinols substitués avec Ci-3-alkyl, 3-(4-hydroxyphényl)-1,1,3-triméthylindane-5-ol, 1-(4-hydroxyphényl)-1,3,3-triméthylindane-5-ol, et 2,2,2',2'-tétrahydro-3,3,3',3'-tétraméthyl-1, 1'-spirobi[1H-indène]-6,6'-diol.

11. Composition selon la revendication 1, dans laquelle le deuxième composé dihydroxy-aromatique est le bisphénol A.

12. Composition selon la revendication 1, dans laquelle la résine C thermoplastique est sélectionnée parmi le groupe consistant en un homopolycarbonate, un poly(estercarbonate), un poly(acrylate carbonate) et les combinaisons de ceux-ci.

13. Composition selon la revendication 1, dans laquelle la résine C thermoplastique est un poly(acrylate carbonate).

14. Composition selon la revendication 1, dans laquelle la résine C thermoplastique est un homopolycarbonate dérivé du deuxième composé dihydroxy-aromatique.

15. Procédé comprenant :
1. mélanger un polyester, un copolycarbonate et une résine C thermoplastique pour former un premier mélange ;
2. faire chauffer le premier mélange à une température suffisamment haute pour former une composition de matière comprenant une composition de résine thermoplastique dérivée de
a. 20 % en poids à 80 % en poids d'un polyester dérivé d'un diol comprenant du cyclohexane diméthanol et un diacide ;
b. 5 % en poids à 80 % en poids d'un copolycarbonate dérivé de 20 % en poids à 70 % en poids d'un 2-hydrocarbyl-3,3-bis(hydroxyaryl)phtalimidine et de 30 % en poids à 80 % en poids d'un deuxième composé dihydroxy-aromatique ;
c. 0 % en poids à 70 % en poids d'une résine thermoplastique C ; et
dans lequel la composition de résine est transparente.
